# EUROPEAN PATENT APPLICATION

(11) **EP 4 250 535 A1**
(43) Date of publication of application: **27.09.2023**
(21) Application number: 22871074.5
(22) Date of filing: 07.02.2022
(51) Int. Cl.: H02K 1/22

(54) **ROTATING MACHINE**

(71) Applicant: IHI Corporation, Tokyo 135-8710 (JP)
(72) Inventor: YAMAGUCHI, Koji, Tokyo 135-8710 (JP); JIKUMARU, Takehiro, Tokyo 135-8710 (JP); YONEYAMA, Natsuki, Tokyo 135-8710 (JP); YOSHINAGA, Seiichiro, Tokyo 135-8710 (JP); AKAMATSU, Yosuke, Tokyo 135-8710 (JP); YAMADA, Tatsuro, Tokyo 135-8710 (JP); KAKUTA, Tomoya, Tokyo 135-8710 (JP); AKIYAMA, Masahiro, Tokyo 135-8710 (JP)
(74) Representative: TBK
(86) International application number: PCT/JP2022/004737
(87) International publication number: WO 2023/148981

(57) **Abstract**

A rotating machine includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed to have a cross-sectional area in a d-axis direction of the magnet portion different from a cross-sectional area in a q-axis direction of the magnet portion in a cross-section perpendicular to the rotational axis.

## Description

### Technical Field

The present disclosure relates to a rotating machine.

### Background Art

A brushless motor including a surface magnet rotor is conventionally known as a rotating machine as disclosed, for example, in Japanese Unexamined Patent Publication No. 2019-161933. This rotor has magnets around the rotating shaft. The magnets are disposed so that the magnetic poles alternate in the circumferential direction.

### Citation List

### Patent Literature

Patent Literature 1: Japanese Unexamined Patent Publication No. 2019-161933

### Summary of Invention

### Technical Problem

In such a rotating machine including a surface magnet rotor, it is difficult to improve output using reluctance torque. In a surface magnet rotor, a permanent magnet is disposed along the circumferential surface. In such a rotor, reluctance torque does not tend to be generated, and rotation is mainly caused by magnet torque.

There is thus a need for the development of a rotating machine which is capable of improving output using reluctance torque.

### Solution to Problem

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed to have a cross-sectional area in a d-axis direction of the magnet portion different from a cross-sectional area in a q-axis direction of the magnet portion in a cross-section perpendicular to the rotational axis. Since the shaft member of the rotor is formed to have a cross-sectional area in the d-axis direction of the magnet portion different from the cross-sectional area in the q-axis direction of the magnet portion in this rotating machine, the ease of passage of magnetic flux can be made to be different in the d-axis direction and the q-axis direction in the shaft member. Thus, the output of the rotating machine can be improved using reluctance torque during the operation of the rotating machine.

The shaft member may be formed such that the cross-sectional area in the d-axis direction is greater than the cross-sectional area in the q-axis direction in the cross-section perpendicular to the rotational axis. In this case, since the shaft member of the rotor is formed such that the cross-sectional area in the d-axis direction is greater than the cross-sectional area in the q-axis direction, the passage of magnetic flux is facilitated in the d-axis direction compared with the q-axis direction in the shaft member. Thus, the output of the rotating machine can be improved using reluctance torque during the operation of the rotating machine.

The shaft member may be formed such that the cross-sectional area in the q-axis direction is greater than the cross-sectional area in the d-axis direction in the cross-section perpendicular to the rotational axis. In this case, since the shaft member of the rotor is formed such that the cross-sectional area in the q-axis direction is greater than the cross-sectional area in the d-axis direction, the passage of magnetic flux is facilitated in the q-axis direction compared with the d-axis direction in the shaft member. Thus, the output of the rotating machine can be improved using reluctance torque during the operation of the rotating machine.

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed to have a cross-sectional length in a d-axis direction of the magnet portion different from a cross-sectional length in a q-axis direction of the magnet portion in a cross-section perpendicular to the rotational axis. Since the shaft member of the rotor is formed to have a cross-sectional length in the d-axis direction of the magnet portion different from the cross-sectional length in the q-axis direction of the magnet portion in this rotating machine, the ease of passage of magnetic flux can be made to be different in the d-axis direction and the q-axis direction in the shaft member. Thus, the output of the rotating machine can be improved using reluctance torque during the operation of the rotating machine.

The shaft member may be formed such that the cross-sectional length in the d-axis direction is greater than the cross-sectional length in the q-axis direction in the cross-section perpendicular to the rotational axis. In this case, since the shaft member of the rotor is formed such that the cross-sectional length in the d-axis direction is greater than the cross-sectional length in the q-axis direction, the passage of magnetic flux is facilitated in the d-axis direction compared with the q-axis direction in the shaft member. Thus, the output of the rotating machine can be improved using reluctance torque during the operation of the rotating machine.

The shaft member may be formed such that the cross-sectional length in the q-axis direction is greater than the cross-sectional length in the d-axis direction in the cross-section perpendicular to the rotational axis. In this case, since the shaft member of the rotor is formed such that the cross-sectional length in the q-axis direction is greater than the cross-sectional length in the d-axis direction, the passage of magnetic flux is facilitated in the q-axis direction compared with the d-axis direction in the shaft member. Thus, the output of the rotating machine can be improved using reluctance torque during the operation of the rotating machine.

The stator may form a rotating magnetic field preceding the d-axis direction in a direction of rotation of the rotor, and rotate the magnetic field in the direction of rotation to rotate the rotor. In the case in which the cross-sectional area of the shaft member in the d-axis direction is formed greater than the cross-sectional area in the q-axis direction, or the cross-sectional length of the shaft member in the d-axis direction is formed greater than the cross-sectional length in the q-axis direction, reluctance torque can be generated in the rotor by the stator forming a rotating magnetic field preceding the d-axis direction with respect to the rotor. Thus, the output of the rotating machine can be improved.

The stator may form a magnetic field preceding the q-axis direction in a direction of rotation of the rotor, and rotate the magnetic field in the direction of rotation to rotate the rotor. In the case in which the cross-sectional area of the shaft member in the q-axis direction is formed greater than the cross-sectional area in the d-axis direction, or the cross-sectional length of the shaft member in the q-axis direction is formed greater than the cross-sectional length in the d-axis direction, reluctance torque can be generated in the rotor by the stator forming a rotating magnetic field preceding the q-axis direction with respect to the rotor. Thus, the output of the rotating machine can be improved.

The magnet portion may have a bonded magnet provided on the outer circumferential side of the shaft member and forming alternating opposite magnetic poles along the circumferential direction, and a sintered magnet disposed embedded inside the bonded magnet. In this case, the magnetic force of the magnet portion can be enhanced by the magnet portion being provided with the sintered magnet. Additionally, the magnetic force of the magnet portion can be enhanced while suppressing eddy current loss by disposing the low resistance sintered magnet inside the high resistance bonded magnet.

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed such that the ease of passage of magnetic flux is at a maximum in an angular direction between a d-axis direction of the magnet portion and a q-axis direction of the magnet portion in a cross-section perpendicular to the rotational axis. In this rotating machine, reluctance torque can be generated by the shaft member being formed such that the ease of passage of magnetic flux is at a maximum in an angular direction between the d-axis direction and the q-axis direction in the cross-section perpendicular to the rotational axis. Thus, the output can be improved using the reluctance torque even in this surface magnet rotating machine.

The shaft member may be formed such that the ease of passage of magnetic flux is at a maximum in an intermediate angular direction between the d-axis direction of the magnet portion and the q-axis direction of the magnet portion in the cross-section perpendicular to the rotational axis. In this case, a large reluctance torque can be generated by the shaft member being formed such that the ease of passage of magnetic flux is at a maximum in an intermediate angular direction between the d-axis direction and the q-axis direction. Thus, the output can be improved using the reluctance torque even in this surface magnet rotating machine.

The stator may form a magnetic field oriented in the q-axis direction, and may rotate the magnetic field in the direction of rotation to rotate the rotor. In this case, a large magnet torque and a large reluctance torque can be generated by the stator forming the magnetic field oriented in the q-axis direction. Thus, the output can be improved by generating a large reluctance torque even in this surface magnet rotating machine.

### Advantageous Effects of Invention

The present disclosure is capable of providing a rotating machine that is capable of improving output using reluctance torque.

### Brief Description of Drawings

FIG. 1 is a cross-sectional view illustrating an overview of a rotating machine according to a first embodiment of the present disclosure.
FIG. 2 is a cross-sectional view illustrating a rotor of the rotating machine of FIG. 1.
FIG. 3 is a perspective view illustrating the rotor of FIG. 2.
FIG. 4 is a block diagram illustrating an overview of the electrical configuration of the rotating machine of FIG. 1.
FIG. 5 is a diagram illustrating a magnetic field applied to the rotor of FIG. 2.
FIG. 6 is a flowchart illustrating the operation of the rotating machine of FIG. 1.
FIG. 7 is a graph illustrating the relationship between a current phase angle and an output torque in the rotating machine of FIG. 1.
FIG. 8 are diagrams illustrating variations of the rotating machine of FIG. 1.
FIG. 9 are diagrams illustrating variations of the rotating machine of FIG. 1.
FIG. 10 are diagrams illustrating variations of the rotating machine of FIG. 1.
FIG. 11 is a diagram illustrating a variation of the rotating machine of FIG. 1.
FIG. 12 is a cross-sectional view illustrating an overview of a rotating machine according to a second embodiment of the present disclosure.
FIG. 13 is a diagram illustrating a magnetic field applied to a rotor of the rotating machine of FIG. 12.
FIG. 14 is a graph illustrating the relationship between a current phase angle and an output torque in the rotating machine of FIG. 12.
FIG. 15 is a cross-sectional view illustrating an overview of a rotating machine according to a third embodiment of the present disclosure.
FIG. 16 is a cross-sectional view illustrating an overview of the rotating machine according to the third embodiment of the present disclosure.
FIG. 17 is a cross-sectional view illustrating an overview of a rotating machine according to a fourth embodiment of the present disclosure.
FIG. 18 is a graph illustrating the relationship between a current phase angle and an output torque in the rotating machine of FIG. 17.
FIG. 19 are diagrams illustrating variations of the rotating machine of FIG. 17.
FIG. 20 are diagrams illustrating variations of the rotating machine of FIG. 17.
FIG. 21 are diagrams illustrating variations of the rotating machine of FIG. 17.
FIG. 22 is a diagram illustrating a variation of the rotating machine of FIG. 17.
FIG. 23 is a diagram illustrating a variation of the rotating machine of FIG. 17.
FIG. 24 is a diagram illustrating a variation of the rotating machine of FIG. 17.
FIG. 25 is a cross-sectional view illustrating an overview of a rotating machine according to a fifth embodiment of the present disclosure.
FIG. 26 is a graph illustrating the relationship between a current phase angle and an output torque in the rotating machine of FIG. 25.
FIG. 27 is a cross-sectional view illustrating an overview of a rotating machine according to a sixth embodiment of the present disclosure.
FIG. 28 is a graph illustrating the relationship between a current phase angle and an output torque in the rotating machine of FIG. 27.
FIG. 29 is a diagram illustrating a variation of the rotating machine of FIG. 27.
FIG. 30 is a graph illustrating the relationship between a current phase angle and an output torque in the rotating machine of FIG. 29.
FIG. 31 is a diagram illustrating a variation of the rotating machine of FIG. 27.
FIG. 32 is a graph illustrating the relationship between a current phase angle and an output torque in the rotating machine of FIG. 31.

### Description of Embodiments

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed to have a cross-sectional area in a d-axis direction of the magnet portion different from a cross-sectional area in a q-axis direction of the magnet portion in a cross-section perpendicular to the rotational axis. Since the shaft member of the rotor is formed to have a cross-sectional area in the d-axis direction of the magnet portion different from the cross-sectional area in the q-axis direction of the magnet portion in this rotating machine, the ease of passage of magnetic flux can be made to be different in the d-axis direction and the q-axis direction in the shaft member. Thus, the output of the rotating machine can be improved using reluctance torque during the operation of the rotating machine.

The shaft member may be formed such that the cross-sectional area in the d-axis direction is greater than the cross-sectional area in the q-axis direction in the cross-section perpendicular to the rotational axis. In this case, since the shaft member of the rotor is formed such that the cross-sectional area in the d-axis direction is greater than the cross-sectional area in the q-axis direction, the passage of magnetic flux is facilitated in the d-axis direction compared with the q-axis direction in the shaft member. Thus, the output of the rotating machine can be improved using reluctance torque during the operation of the rotating machine.

The shaft member may be formed such that the cross-sectional area in the q-axis direction is greater than the cross-sectional area in the d-axis direction in the cross-section perpendicular to the rotational axis. In this case, since the shaft member of the rotor is formed such that the cross-sectional area in the q-axis direction is greater than the cross-sectional area in the d-axis direction, the passage of magnetic flux is facilitated in the q-axis direction compared with the d-axis direction in the shaft member. Thus, the output of the rotating machine can be improved using reluctance torque during the operation of the rotating machine.

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed to have a cross-sectional length in a d-axis direction of the magnet portion different from a cross-sectional length in a q-axis direction of the magnet portion in a cross-section perpendicular to the rotational axis. Since the shaft member of the rotor is formed to have a cross-sectional length in the d-axis direction of the magnet portion different from the cross-sectional length in the q-axis direction of the magnet portion in this rotating machine, the ease of passage of magnetic flux can be made to be different in the d-axis direction and the q-axis direction in the shaft member. Thus, the output of the rotating machine can be improved using reluctance torque during the operation of the rotating machine.

The shaft member may be formed such that the cross-sectional length in the d-axis direction is greater than the cross-sectional length in the q-axis direction in the cross-section perpendicular to the rotational axis. In this case, since the shaft member of the rotor is formed such that the cross-sectional length in the d-axis direction is greater than the cross-sectional length in the q-axis direction, the passage of magnetic flux is facilitated in the d-axis direction compared with the q-axis direction in the shaft member. Thus, the output of the rotating machine can be improved using reluctance torque during the operation of the rotating machine.

The shaft member may be formed such that the cross-sectional length in the q-axis direction is greater than the cross-sectional length in the d-axis direction in the cross-section perpendicular to the rotational axis. In this case, since the shaft member of the rotor is formed such that the cross-sectional length in the q-axis direction is greater than the cross-sectional length in the d-axis direction, the passage of magnetic flux is facilitated in the q-axis direction compared with the d-axis direction in the shaft member. Thus, the output of the rotating machine can be improved using reluctance torque during the operation of the rotating machine.

The stator may form a rotating magnetic field preceding the d-axis direction in a direction of rotation of the rotor, and may rotate the magnetic field in the direction of rotation to rotate the rotor. In the case in which the cross-sectional area of the shaft member in the d-axis direction is formed greater than the cross-sectional area in the q-axis direction, or the cross-sectional length of the shaft member in the d-axis direction is formed greater than the cross-sectional length in the q-axis direction, reluctance torque can be generated in the rotor by the stator forming the rotating magnetic field preceding the d-axis direction with respect to the rotor. Thus, the output of the rotating machine can be improved.

The stator may form a magnetic field preceding the q-axis direction in a direction of rotation of the rotor, and may rotate the magnetic field in the direction of rotation to rotate the rotor. In the case in which the cross-sectional area of the shaft member in the q-axis direction is formed greater than the cross-sectional area in the d-axis direction, or the cross-sectional length of the shaft member in the q-axis direction is formed greater than the cross-sectional length in the d-axis direction, reluctance torque can be generated in the rotor by the stator forming the rotating magnetic field preceding the q-axis direction with respect to the rotor. Thus, the output of the rotating machine can be improved.

The magnet portion may have a bonded magnet provided on the outer circumferential side of the shaft member and forming alternating opposite magnetic poles along the circumferential direction, and a sintered magnet disposed embedded inside the bonded magnet. In this case, the magnetic force of the magnet portion can be enhanced by the magnet portion being provided with the sintered magnet. Additionally, the magnetic force of the magnet portion can be enhanced while suppressing eddy current loss by disposing the low resistance sintered magnet inside the high resistance bonded magnet.

A rotating machine according to one embodiment of the present disclosure includes a surface magnet rotor rotatably disposed inside a stator. The rotor includes a shaft member disposed along a rotational axis, and a magnet portion provided on an outer circumferential side of the shaft member and forming alternating opposite magnetic poles along a circumferential direction. The shaft member is formed such that the ease of passage of magnetic flux is at a maximum in an angular direction between a d-axis direction of the magnet portion and a q-axis direction of the magnet portion in a cross-section perpendicular to the rotational axis. In this rotating machine, reluctance torque can be generated by the shaft member being formed such that the ease of passage of magnetic flux is at a maximum in an angular direction between the d-axis direction and the q-axis direction in the cross-section perpendicular to the rotational axis. Thus, the output can be improved using the reluctance torque even in this surface magnet rotating machine.

The shaft member may be formed such that the ease of passage of magnetic flux is at a maximum in an intermediate angular direction between the d-axis direction of the magnet portion and the q-axis direction of the magnet portion in the cross-section perpendicular to the rotational axis. In this case, a large reluctance torque can be generated by the shaft member being formed such that the ease of passage of magnetic flux is at a maximum in an intermediate angular direction between the d-axis direction and the q-axis direction. Thus, the output can be improved using the reluctance torque even in this surface magnet rotating machine.

The stator may form a magnetic field oriented in the q-axis direction, and may rotate the magnetic field in the direction of rotation to rotate the rotor. In this case, a large magnet torque and a large reluctance torque can be generated by the stator forming the magnetic field oriented in the q-axis direction. Thus, the output can be improved by generating a large reluctance torque even in this surface magnet rotating machine.

Embodiments of the present disclosure will be described below with reference to the drawings. Like elements are given like reference signs in the description of the drawings, and redundant explanation will be omitted.

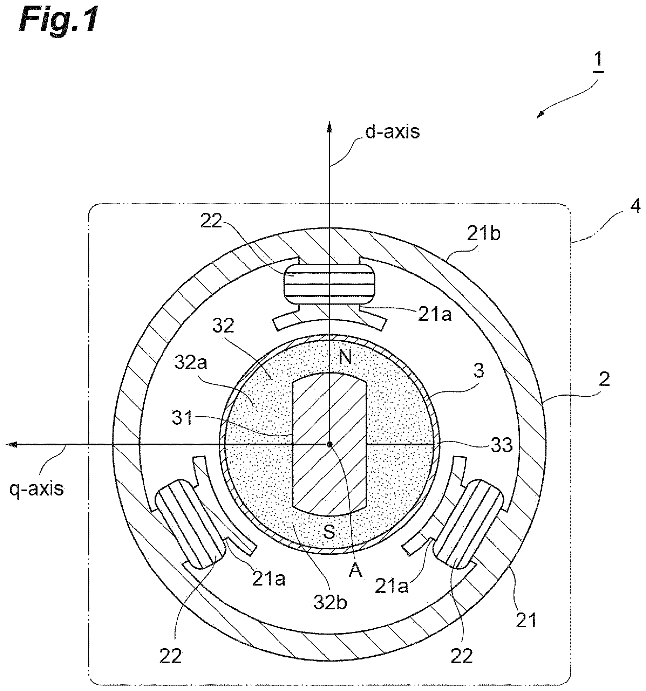

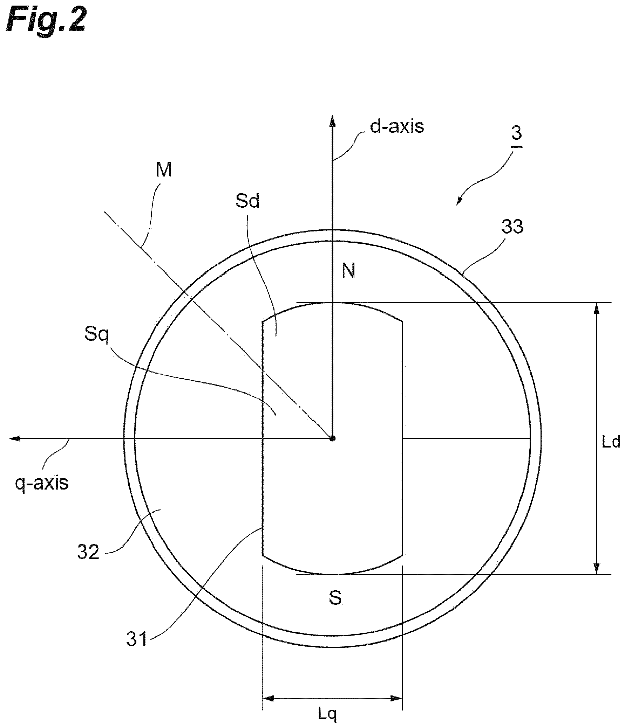

FIG. 1 is a cross-sectional view illustrating the configuration of a rotating machine according to a first embodiment of the present disclosure. FIG. 2 is a cross-sectional view of a rotor of the rotating machine of FIG. 1.

As illustrated in FIG. 1, a rotating machine 1 according to the first embodiment is formed having a surface magnet rotor 3 rotatably disposed inside a stator 2. The rotating machine 1 is, for example, an electric motor. The rotating machine 1 rotates the rotor 3 by a supply of electrical energy to generate mechanical energy. The stator 2 generates a magnetic field that rotates about a rotational axis A to rotate the rotor 3. The stator 2 is accommodated in a housing 4. The stator 2 is fixed so as not to rotate or move with respect to the housing 4. The rotor 3 is supported by a bearing or the like provided in the housing 4. The rotor 3 is attached, rotatable about the rotational axis A.

The stator 2 is configured including, for example, a core 21 and a coil 22. The core 21 is an iron core which is to be a magnetic flux path. The core 21 forms teeth 21a formed at regular intervals along an outer circumference of the rotor 3. For example, the core 21 has a cylindrical portion 21b capable of having the rotor 3 disposed therein. For example, the teeth 21a project toward the rotational axis A from an inner surface of the cylindrical portion 21b. The teeth 21a are portions around which the coil 22 is wound. A front edge of each tooth 21a is broad. For example, three teeth 21a are formed along a circumferential direction.

The core 21 is formed, for example, by stacking steel sheets in the direction of the rotational axis A. Stacking steel sheets to form the core 21 enables the generation of eddy currents to be suppressed and iron loss to be reduced. The coil 22 is a winding for carrying an electric current. The coil 22 is wound around each tooth 21a, and generates a magnetic field with respect to the rotor 3 by the flow of the electric current. For example, the magnetic field is formed along a radial direction of the rotor 3. A magnetic field that rotates about the rotational axis A can be formed by passing electric currents out of phase with each other through the coils 22.

The rotor 3 includes a shaft member 31 disposed along the rotational axis A, and a magnet portion 32 which is provided on an outer circumferential side of the shaft member 31 and forms alternating opposite magnetic poles along the circumferential direction. The shaft member 31 is a rod-like member. The shaft member 31 serves as a shaft for the rotating machine 1. The shaft member 31 is formed, for example, of a magnetic material such as metal. The shaft member 31 is formed using a material having a higher magnetic permeability (for example, a ferromagnetic material) than the magnet portion 32. For example, when a bonded magnet is used as the magnet portion 32, the magnetic permeability of the shaft member 31 is 100 times or more higher than the magnetic permeability of the magnet portion 32. The direction in which the passage of magnetic flux is facilitated in the shaft member 31 is thus the direction in which the passage of magnetic flux is facilitated in the rotor 3.

The magnet portion 32 is provided so as to cover an outer circumference of the shaft member 31. The magnet portion 32 is provided, for example, without other objects interposed between the magnet portion 32 and the shaft member 31. However, a configuration in which an object such as an adhesive for adhering the magnet portion 32 to the shaft member 31 is present between the magnet portion 32 and the shaft member 31 is not excluded. The magnet portion 32 is composed of magnetic poles. For example, a bipolar magnet having two magnetic poles is used as the magnet portion 32. That is, the magnet portion 32 includes a magnet 32a having a north pole on an outer circumferential side in the radial direction, and a magnet 32b having a south pole on an outer circumferential side in the radial direction. The magnet 32a and the magnet 32b are disposed dividing the outer circumference of the shaft member 31 in the circumferential direction. The magnet 32a and the magnet 32b each covers half of the outer circumference of the shaft member 31.

The magnet 32a and the magnet 32b are formed, for example, of a bonded magnet. That is, the magnet 32a and the magnet 32b are formed by tiny magnets being incorporated into resin or rubber. The bonded magnet is also referred to as a rubber magnet or a plastic magnet. Forming the magnet 32a and the magnet 32b from a bonded magnet facilitates the magnet 32a and the magnet 32b to be formed corresponding to the shape of the shaft member 31. Magnets other than a bonded magnet may be used for the magnet 32a and the magnet 32b.

A sleeve 33 is attached to an outer circumference of the magnet portion 32. The sleeve 33 is, for example, a cylindrical member made of a non-magnetic material. The sleeve 33 restrains the magnet portion 32 by being attached to the outer circumference of the magnet portion 32. That is, the sleeve 33 prevents the magnet portion 32 from being removed from the shaft member 31 during rotation of the rotor 3.

The shaft member 31 is formed to have a cross-sectional area in a d-axis direction of the magnet portion 32 different from a cross-sectional area in a q-axis direction of the magnet portion 32 in a cross-section perpendicular to the rotational axis A. In other words, in a case in which the cross-section of the rotor 3 is circular, the shaft member 31 is formed such that the proportion of the cross-sectional area of the shaft member 31 and the proportion of the cross-sectional area of the magnet portion 32 are different in the d-axis direction and the q-axis direction. The shaft member 31 is formed to have a cross-sectional length in the d-axis direction of the magnet portion 32 different from a cross-sectional length in the q-axis direction of the magnet portion 32 in the cross-section perpendicular to the rotational axis A. The d-axis direction of the magnet portion 32 is a main flux direction of the magnet portion 32, and is, for example, a direction that passes through the center of a circumferential direction of the magnet 32a having the north pole on the outer circumferential side. The q-axis direction of the magnet portion 32 is a direction along the boundary between the magnet 32a and the magnet 32b. For example, in the case in which the magnet portion 32 is bipolar, the d-axis direction and the q-axis direction are perpendicular to each other.

The shaft member 31 is formed, for example, such that the cross-sectional area in the d-axis direction is greater than the cross-sectional area in the q-axis direction in the cross-section perpendicular to the rotational axis A. The shaft member 31 is formed, for example, such that a cross-section in the d-axis direction is longer than a cross-section in the q-axis direction in the cross-section perpendicular to the rotational axis A. The shaft member 31 is formed such that the cross-section in the radial direction is noncircular at least in the position in an axial direction in which the magnet portion 32 is provided. For example, the shaft member 31 has a shape in which both sides of a circle are cut off in the cross-section perpendicular to the rotational axis A. That is, by both sides of the circle in the q-axis direction being cut off, the shaft member 31 has a cross-sectional area in the d-axis direction greater than the cross-sectional area in the q-axis direction, and a cross-sectional length in the d-axis direction greater than the cross-sectional length in the q-axis direction in the cross-section perpendicular to the rotational axis A. The torque transmission performance between the magnet portion 32 and the shaft member 31 can be improved by the cross-section of the shaft member 31 being noncircular compared with the case in which the cross-section is circular. That is, the relative misalignment between the magnet portion 32 and the shaft member 31 can be suppressed, and the magnet portion 32 and the shaft member 31 can be reliably rotated as a unit.

As illustrated in FIG. 2, the shaft member 31 has a cross-sectional area in the d-axis direction greater than the cross-sectional area in the q-axis direction, and a cross-sectional length in the d-axis direction greater than the cross-sectional length in the q-axis direction in the cross-section perpendicular to the rotational axis A. For example, when an intermediate line M is set passing through the middle of the d-axis and the q-axis, a cross-sectional area Sd between the d-axis and the intermediate line M is greater than a cross-sectional area Sq between the q-axis and the intermediate line M in the cross-section of the shaft member 31. Thus, the passage of magnetic flux is facilitated in the d-axis direction compared with the q-axis direction in the shaft member 31, and facilitated in the d-axis direction compared with the q-axis direction in the rotor 3. That is, since the magnetic permeability of the shaft member 31 is sufficiently high with respect to the magnet portion 32, facilitating the passage of magnetic flux in the d-axis direction in the shaft member 31 facilitates the passage of magnetic flux in the d-axis direction in the rotor 3. The ease of passage of magnetic flux (synthetic permeability) can be represented by the following formula.

### [Formula 1]

In this formula, the ease of passage of magnetic flux (synthetic permeability) is represented by adding up the magnetic permeabilities of the materials constituting the rotor 3 in a straight line intersecting the rotational axis A and extending in the radial direction. This formula shows the ease of passage of magnetic flux in a cylindrical coordinate system with the rotational axis A being a z direction. µ is the magnetic permeability of the material. R is the radius of the rotor 3 in the cross-section of interest. θ is the angle of the rotor 3 in the circumferential direction. Facilitating the passage of magnetic flux in the d-axis direction compared with the q-axis direction in the rotor 3 in this way enables reluctance torque to be generated during the operation of the rotating machine 1. For example, a length Ld in the d-axis direction is greater than a length Lq in the q-axis direction in the cross-section of the shaft member 31. The passage of magnetic flux is thus facilitated in the d-axis direction compared with the q-axis direction in the shaft member 31, and facilitated in the d-axis direction compared with the q-axis direction in the rotor 3. Consequently, reluctance torque can be generated during the operation of the rotating machine 1.

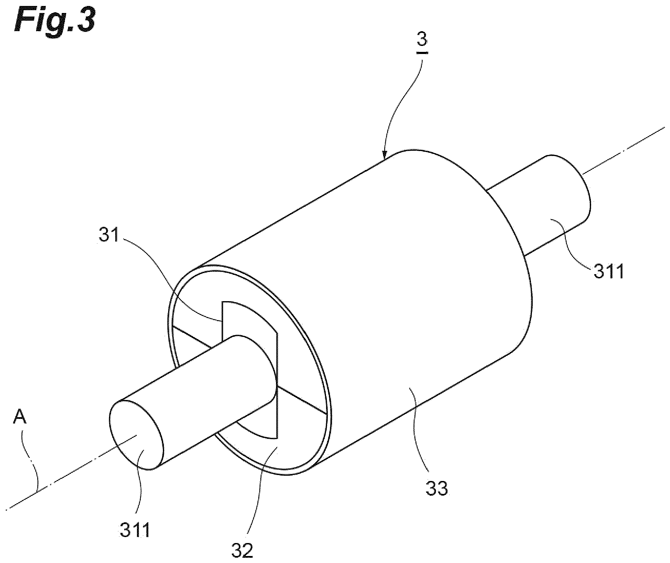

FIG. 3 is a perspective view of the rotor 3. As illustrated in FIG. 3, the shaft member 31 of the rotor 3 extends along the rotational axis A and is provided projecting from the magnet portion 32. In the shaft member 31, the cross-sectional shape of an extending portion 311 extending from the magnet portion 32 is, for example, circular. The extending portion 311 is the portion supported by the housing 4. The portions of the extending portion 311 that extend out of the housing 4 are used as an output shaft of the rotating machine 1. The shaft member 31 is formed to have a cross-sectional area in the d-axis direction of the magnet portion 32 different from the cross-sectional area in the q-axis direction of the magnet portion 32, and to have a cross-sectional length in the d-axis direction of the magnet portion 32 different from the cross-sectional length in the q-axis direction of the magnet portion 32 at least in the position in the axial direction in which the magnet portion 32 is provided. In other words, the shaft member 31 need not be formed to have a cross-sectional area in the d-axis direction of the magnet portion 32 different from the cross-sectional area in the q-axis direction of the magnet portion 32, and need not be formed to have a cross-sectional length in the d-axis direction of the magnet portion 32 different from the cross-sectional length in the q-axis direction of the magnet portion 32 in positions in the axial direction in which the magnet portion 32 is not provided. The shaft member 31 may have a transition portion which has a cross-sectional shape that changes along the rotational axis A in the cross-section perpendicular to the rotational axis A. The transition portion of the present embodiment is formed so as to be flush with end surfaces of the magnet portion 32 in the direction of the rotational axis A.

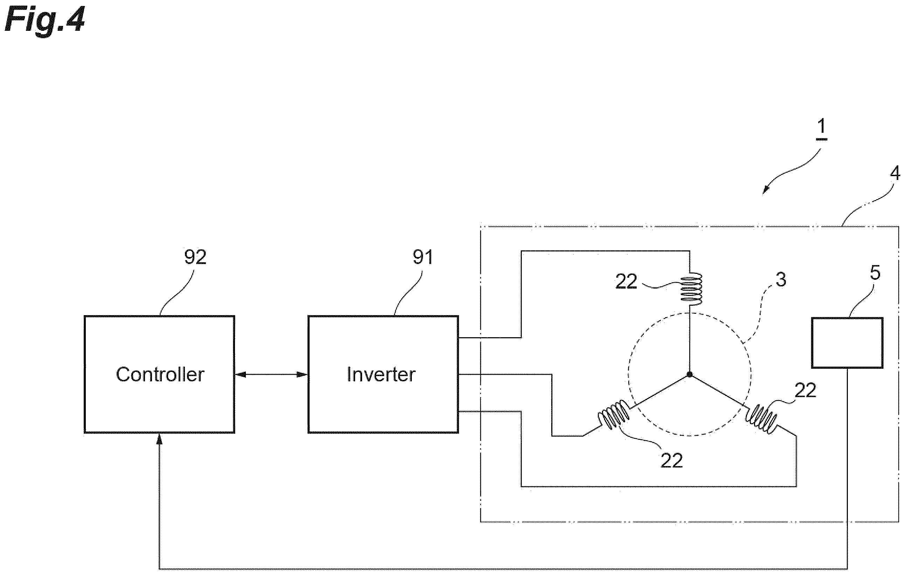

FIG. 4 is a block diagram illustrating an overview of the electrical configuration of the rotating machine 1. As illustrated in FIG. 4, the three coils 22 of the stator 2 are connected, for example, in a Y-connection (star connection). That is, one ends of the coils 22 are connected to each other, and the other ends of the coils 22 are connected to an inverter 91. Each coil 22 applies a rotating magnetic field to the rotor 3 by a three-phase alternating current passing therethrough. The inverter 91 is a device for converting DC voltage into AC voltage. The inverter 91, for example, applies a three-phase AC voltage to the coils 22. For example, a bridge circuit using six power transistors is used as the inverter 91. The inverter 91 operates when a control signal of a controller 92 is received, and supplies electric currents to the coils 22. The controller 92 outputs a control signal to the inverter 91 according to an operation command from outside. The controller 92 is an electronic control device that controls the rotating machine 1. The controller 92 is composed of a computer including, for example, a CPU, a ROM, and a RAM. The inverter 91 and the controller 92 may be formed integral with the housing 4 that accommodates the stator 2 and the rotor 3, or may be installed outside the housing 4. The inverter 91 may be provided inside the controller 92.

The rotating machine 1 includes a sensor 5 that detects a rotational state of the rotor 3. For example, a magnetic sensor such as a Hall element, or a rotary encoder is used as the sensor 5. The sensor 5 is connected to the controller 92, and an output signal of the sensor 5 is input to the controller 92. The controller 92 recognizes the rotational state of the rotor 3 and the shaft member 31 on the basis of the output signal of the sensor 5. The rotational state of the rotor 3 and the shaft member 31 includes all or a portion of the rotational position of the rotor 3, the rotational speed of the rotor 3, the rotational speed of the shaft member 31, and the rotational speed of the shaft member 31. Although the sensor 5 is used in this embodiment, the rotational position of the rotor 3 may be detected by sensorless control or the like, and the installation of the sensor 5 may be omitted.

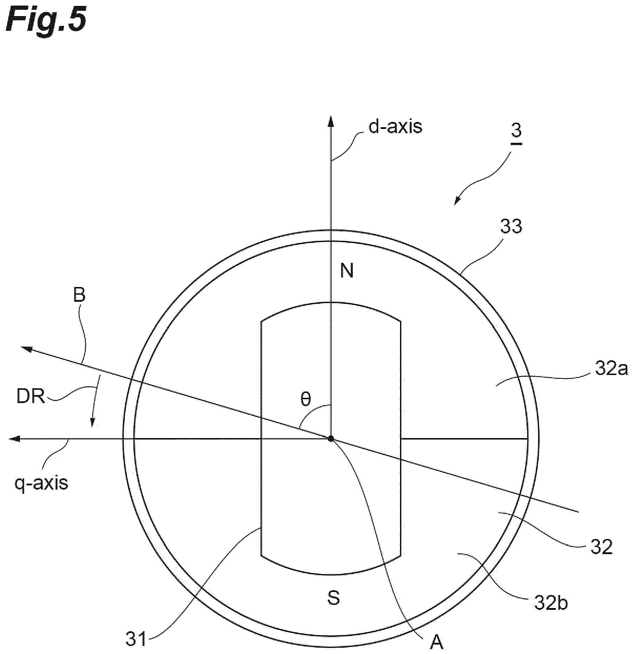

FIG. 5 is a diagram illustrating a magnetic field B generated by the stator 2. An orientation of the magnetic field B in FIG. 5 is indicated by a magnetic line of force as an exemplary orientation of the magnetic field B (for example, a central orientation of the magnetic field B or an average orientation of the magnetic field B) generated by the stator 2. In the rotating machine 1, for example, the magnetic field B is formed so as to be oriented in a direction passing between the d-axis and the q-axis of the rotor 3. That is, the stator 2 forms the magnetic field B preceding the d-axis direction in a direction of rotation DR of the rotor 3, and rotates the magnetic field B in the direction of rotation DR to rotate the rotor 3. In FIG. 5, the direction of rotation DR is a counterclockwise direction.

In a surface magnet rotating machine (for example, a surface magnet motor), a magnetic field is generally formed oriented in the q-axis direction while being rotatably driven. This is to effectively apply magnet torque. Since almost no reluctance torque is generated in a general surface magnet rotating machine, the magnetic field is formed oriented in the q-axis direction so that the magnet torque works effectively.

In contrast, in the rotating machine 1 according to the present disclosure, the magnetic field B is formed so as to be oriented in the direction passing between the d-axis and the q-axis of the rotor 3 to increase reluctance torque. The orientation of the magnetic field B may be a middle direction passing through the middle of the q-axis and the d-axis. That is, when the bipolar rotor 3 is used, the magnetic field B may be formed such that the angle θ between the d-axis direction and the orientation of the magnetic field B is 45 degrees. Reluctance torque can be improved by forming the magnetic field B in this manner. The orientation of the magnetic field B may be closer to the q-axis direction than to the d-axis direction. That is, when the bipolar rotor 3 is used, the magnetic field B may be formed such that the angle θ between the d-axis direction and the orientation of the magnetic field B is more than 45 degrees and less than 90 degrees. Reluctance torque can be improved by forming the magnetic field B in this manner. In the rotating machine 1 according to the present disclosure, the shaft member 31 is flat along the d-axis direction. The magnetic flux that passes through the shaft member 31 is thus roughly oriented in the d-axis direction. This can suppress cancellation of the magnetic force of the magnet portion 32 by the magnetic field B.

The operation of the rotating machine 1 according to the present disclosure will next be described.

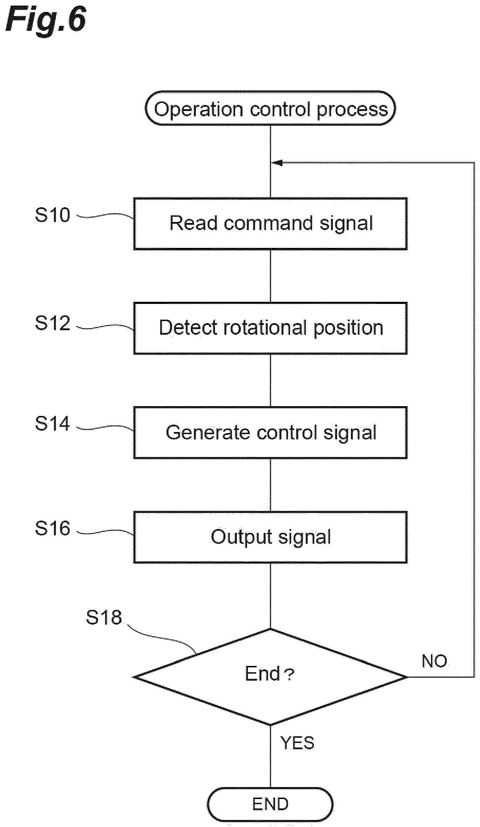

FIG. 6 is a flowchart illustrating the operation of the rotating machine 1, and illustrates an operation control process of the rotating machine 1. The control process of FIG. 6 is executed, for example, by the controller 92, and the rotating machine 1 is operated by this control process. As illustrated in step S10 (hereinafter, simply "S10," with the same applying to the steps subsequent to S10), a read process of a command signal is performed. The read process of a command signal is a process of reading a command signal input to the controller 92. The command signal is for the operation of the rotating machine 1, and is, for example, a signal of rotational speed of the rotating machine 1. The command signal is input to the controller 92, for example, from an external device or an interface.

The process moves to S12 in which a detection process of the rotational position is performed. The detection process is a process of detecting the rotational position of the rotor 3. For example, the controller 92 detects the positions of the magnetic poles of the rotor 3 on the basis of an output signal of the sensor 5. In this detection process of the rotational position, the rotational position of the rotor 3 may be detected without using the sensor 5. For example, the controller 92 may detect the rotational position of the rotor 3 by detecting an induced voltage of each of the coils 22. The process then moves to S14 in which a generation process of a control signal is performed. The generation process of a control signal is a process of generating a control signal to output to the inverter 91. The generation of a control signal is performed, for example, on the basis of the command signal of S10 and the detection result of S12. Specifically, the control signal is generated such that the magnetic field B precedes the rotational position of the rotor 3. That is, the control signal is generated such that the magnetic field B is formed oriented in the direction passing between the d-axis and the q-axis of the rotor 3 as illustrated in FIG. 5. Reluctance torque can be improved by the control signal being generated in this manner.

The control signal may be formed such that the magnetic field B is formed in an orientation closer to the q-axis direction than to the d-axis direction. For example, when the rotor 3 is bipolar, the control signal may be formed such that the angle θ between the d-axis direction and the orientation of the magnetic field B is more than 45 degrees and less than 90 degrees. Reluctance torque can be improved by the control signal being generated in this manner.

The process then moves to S16 in FIG. 6 in which a signal output process is performed. The signal output process is a process of outputting the control signal generated in S14. For example, the controller 92 outputs the control signal generated in S14 to the inverter 91. The inverter 91 accordingly generates a drive current corresponding to the control signal and outputs the drive current to the rotating machine 1. The drive current is input to the stator 2 of the rotating machine 1 and an electric current passes through the coils 22 of the stator 2. The magnetic field B preceding the d-axis direction in the direction of rotation DR of the rotor 3 is thus formed, and the rotor 3 and the shaft member 31 rotate. The magnetic field B is formed so as to be oriented in the direction passing between the d-axis and the q-axis of the rotor 3 as illustrated in FIG. 5. Reluctance torque can be improved by forming the magnetic field B in this manner. The magnetic field B may be formed in an orientation closer to the q-axis direction than to the d-axis direction. Reluctance torque can be improved by forming the magnetic field B in this manner.

The process then moves to S18 in FIG. 6 in which it is determined whether to end the operation of the rotating machine 1. For example, if a signal for ending the operation is not input to the controller 92, it is determined that the operation of the rotating machine 1 is not to be ended, and the process returns to S10. The processes of S10 to S16 then continue to be executed. However, if, for example, a signal for ending the operation is input to the controller 92, it is determined that the operation of the rotating machine 1 is to be ended, and the series of the control process of FIG. 6 ends.

As described above, in the rotating machine 1 according to the present disclosure, the shaft member 31 of the rotor 3 is formed to have a cross-sectional area in the d-axis direction different from the cross-sectional area in the q-axis direction. The ease of passage of magnetic flux can thus be made to be different in the d-axis direction and the q-axis direction in the shaft member 31, and be made to be different in the d-axis direction and the q-axis direction in the rotor 3. Consequently, reluctance torque can be generated during the operation of the rotating machine 1. The output of the rotating machine 1 can be improved using this reluctance torque.

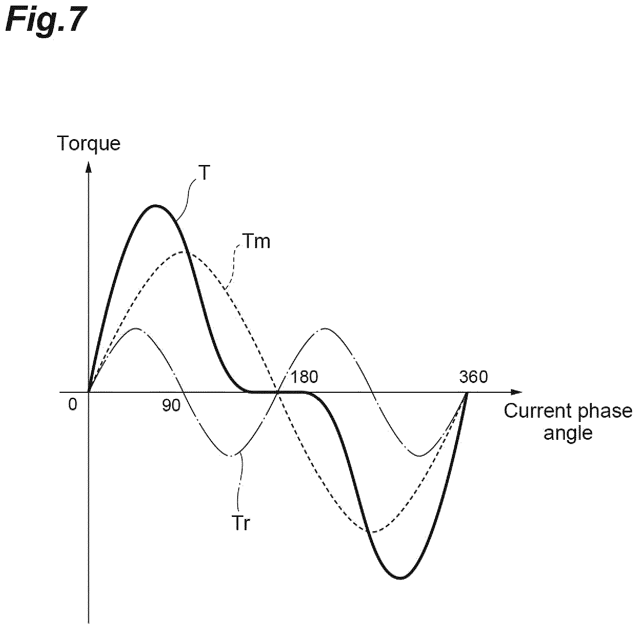

In the rotating machine 1 according to the present embodiment, the shaft member 31 of the rotor 3 is formed such that the cross-sectional area Sd in the d-axis direction is greater than the cross-sectional area Sq in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, reluctance torque can be generated during the operation of the rotating machine 1. The output of the rotating machine 1 can be improved using this reluctance torque. For example, as illustrated in FIG. 7, an output torque T of the rotating machine 1 is a magnet torque Tm and a reluctance torque Tr combined, and it can be seen that the output improves by adjusting the current phase angle compared with the output of only the magnet torque Tm. The vertical axis of FIG. 7 represents the output torque of the rotating machine 1 and the horizontal axis represents the current phase angle. In the current phase angle, the direction of rotation is positive relative to the d-axis.

In the rotating machine 1 according to the present disclosure, the shaft member 31 of the rotor 3 is formed to have a cross-sectional length in the d-axis direction different from the cross-sectional length in the q-axis direction. The ease of passage of magnetic flux can thus be made to be different in the d-axis direction and the q-axis direction in the shaft member 31. Consequently, reluctance torque can be generated during the operation of the rotating machine 1. The output of the rotating machine can be improved using this reluctance torque.

In the rotating machine 1 according to the present embodiment, the shaft member 31 of the rotor 3 is formed such that the cross-sectional length Ld in the d-axis direction is greater than the cross-sectional length Lq in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, reluctance torque can be generated during the operation of the rotating machine 1. The output of the rotating machine 1 can be improved using this reluctance torque.

In the rotating machine 1 according to the present embodiment, the stator 2 forms the magnetic field B that rotates preceding the d-axis direction with respect to the rotor 3 to form the magnetic field B that rotates preceding a longitudinal direction of an axial cross-section using magnet torque. Consequently, reluctance torque can be generated in the rotor 3. As a result, the output of the rotating machine 1 can be improved.

Although the first embodiment of the present disclosure has been described above, the rotating machine of the present disclosure is not limited to the rotating machine 1 of the first embodiment described above. For example, although the shaft member 31 of the rotor 3 has a cross-sectional shape in which both sides of a circle are cut off in the first embodiment above, it may have other cross-sectional shapes.

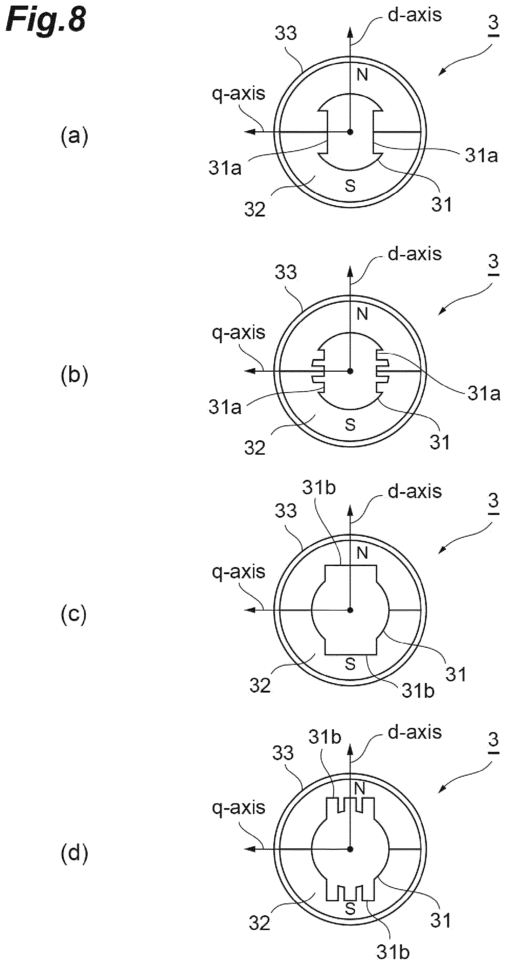

Specifically, as illustrated in FIG. 8(a), the shaft member 31 of the rotor 3 may have a cross-sectional shape in which a recessed portion 31a that is recessed inward is formed on each side of a circle. That is, the recessed portions 31a that are recessed inward along the q-axis direction may be formed in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

As illustrated in FIG. 8(b), a plurality of the recessed portions 31a that are recessed inward may be formed on each side of a circle in the cross-section of the shaft member 31. For example, three recessed portions 31a recessed inward along the q-axis direction may be formed on each side of the circle in the cross-section of the shaft member 31. Even in this case, the shaft member 31 has a cross-sectional area in the d-axis direction greater than the cross-sectional area in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

As illustrated in FIG. 8(c), the shaft member 31 of the rotor 3 may have a cross-sectional shape in which a projected portion 31b projecting outward is formed on each side of a circle. That is, the projected portions 31b projecting outward along the d-axis direction may be formed in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

As illustrated in FIG. 8(d), a plurality of the projected portions 31b projecting outward may be formed on each side of a circle in the cross-section of the shaft member 31. For example, three projected portions 31b projecting outward along the d-axis direction may be formed on each side of the circle in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

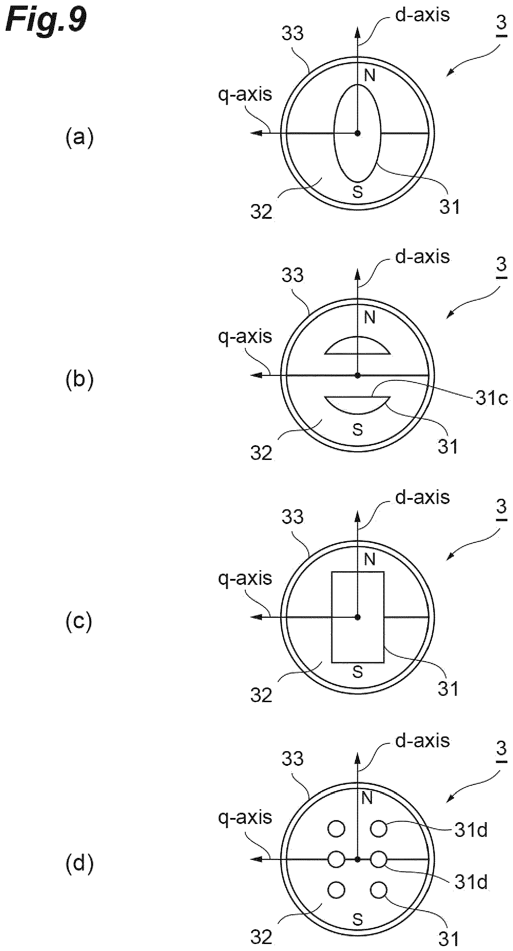

As illustrated in FIG. 9(a), the shaft member 31 of the rotor 3 may have an elliptical cross-sectional shape. That is, the cross-section of the shaft member 31 may be elliptical with the major axis oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

As illustrated in FIG. 9(b), the shaft member 31 of the rotor 3 may have a cross-sectional shape in which a through hole 31c is formed extending in the q-axis direction. That is, the through hole 31c extending in the q-axis direction is formed so as to pass through the center of a circle in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above. The magnetic force of the magnet portion 32 can be increased and magnet torque can be increased by having such shaft member 31.

As illustrated in FIG. 9(c), the shaft member 31 of the rotor 3 may have a rectangular cross-sectional shape. For example, the cross-sectional shape of the shaft member 31 may be a rectangle with the long sides oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

As illustrated in FIG. 9(d), the shaft member 31 of the rotor 3 may be composed of shafts 31d. For example, the shafts 31d are disposed such that the cross-sectional area in the d-axis direction is greater than the cross-sectional area in the q-axis direction, and the cross-sectional length in the d-axis direction is greater than the cross-sectional length in the q-axis direction in the cross-section of the shaft member 31. Specifically, six shafts 31d are arranged: three along the d-axis direction and two along the q-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above. The cross-section of the shafts 31d may be a shape other than a circle. The number of the shafts 3 1d may be other than six.

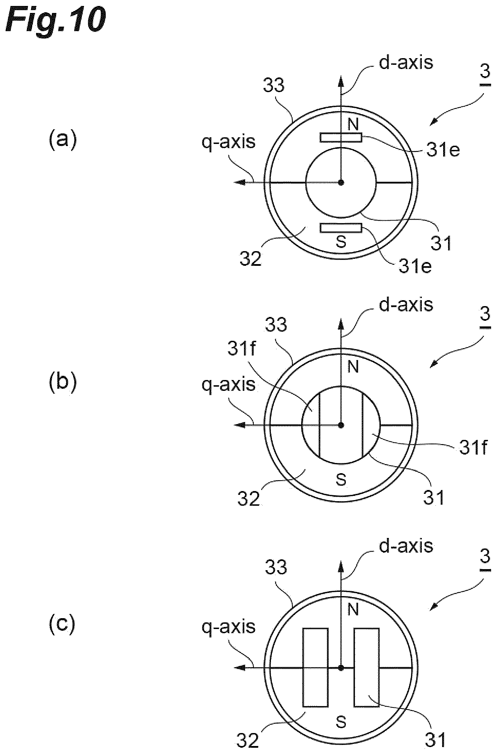

As illustrated in FIG. 10(a), the shaft member 31 of the rotor 3 may have a configuration in which a magnetic member 31e is provided outside a circle. For example, the shaft member 31 may have one magnetic member 31e in each position outside the circle spaced in the d-axis direction. A plurality of the magnetic members 31e may be formed on both sides of the circular cross-section. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above. The cross-sectional shape of the magnetic member 31e may be other than a rectangle.

As illustrated in FIG. 10(b), the shaft member 31 of the rotor 3 may have a cross-sectional shape in which both sides of a circle are cut off, and may have a configuration in which non-magnetic bodies 31f are attached to the portions that are cut off. That is, the shaft member 31 is configured by having the non-magnetic bodies 31f attached to both sides in the q-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above. Furthermore, the shaft member 31 can be reinforced and the strength of the shaft member 31 can be increased by having the non-magnetic bodies 31f attached to the shaft member 31.

As illustrated in FIG. 10(c), the shaft member 31 of the rotor 3 may have rectangular cross-sectional shapes. That is, the cross-sectional shape of the shaft member 31 may be composed of two rectangles with the long sides oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. Consequently, the passage of magnetic flux is facilitated along the d-axis direction and reluctance torque can be increased similarly to the first embodiment described above.

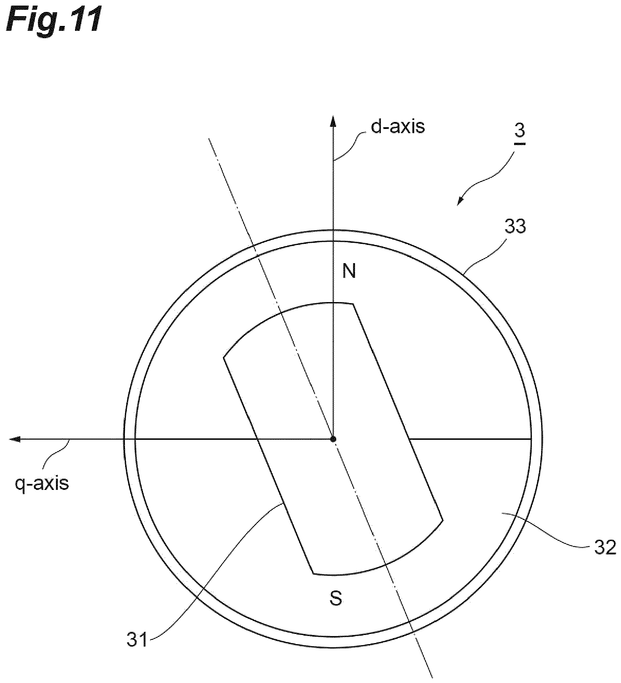

In the first embodiment described above, a longitudinal direction of the shaft member 31 is configured to be oriented in the d-axis direction in the cross-section of the rotor 3, but it need not be configured in this manner. For example, the longitudinal direction of the shaft member 31 may be oriented in a direction offset from the d-axis direction in the cross-section of the rotor 3 as illustrated in FIG. 11. Even in this case, the shaft member 31 is formed such that the cross-sectional area in the d-axis direction is greater than the cross-sectional area in the q-axis direction, and such that the cross-sectional length in the d-axis direction is greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3. As a result, the passage of magnetic flux is facilitated along the d-axis direction and reluctance torque can be increased similarly to the first embodiment described above. The longitudinal direction of the shaft members 31 illustrated in FIGS. 8 to 10 may also be oriented in a direction offset from the d-axis direction.

A rotating machine according to a second embodiment of the present disclosure will next be described.

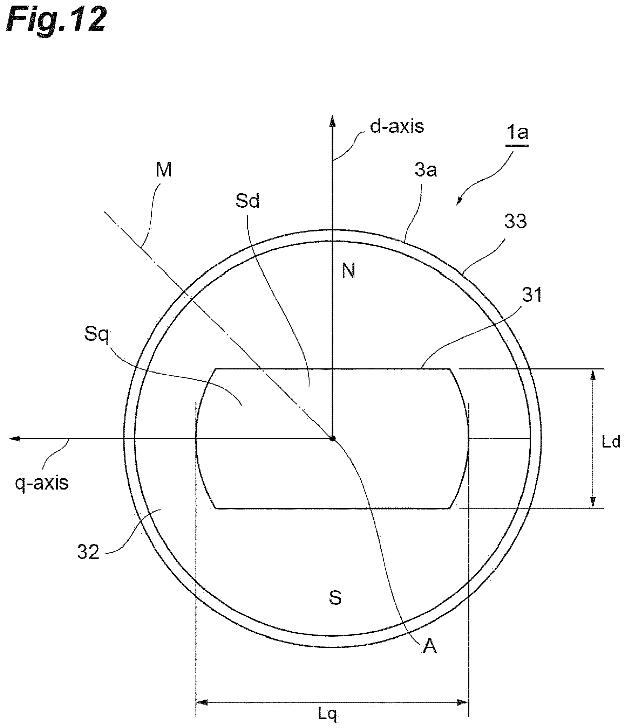

FIG. 12 is a cross-sectional view illustrating a rotor 3a of a rotating machine 1a according to the second embodiment. The rotating machine 1a according to the second embodiment is configured substantially the same as the rotating machine 1 according to the first embodiment. In the rotating machine 1a, only the structure of the rotor 3a is different from the rotating machine 1. The shaft member 31 of the rotor 3 of the rotating machine 1 according to the first embodiment described above is formed such that the cross-sectional area Sd in the d-axis direction is greater than the cross-sectional area Sq in the q-axis direction, and such that the cross-sectional length Ld in the d-axis direction is greater than the cross-sectional length Lq in the q-axis direction. However, unlike the rotor 3 of the rotating machine 1 according to the first embodiment, the shaft member 31 of the rotor 3a of the rotating machine 1a according to the second embodiment is formed such that the cross-sectional area Sq in the q-axis direction is greater than the cross-sectional area Sd in the d-axis direction, and such that the cross-sectional length Lq in the q-axis direction is greater than the cross-sectional length Ld in the d-axis direction.

The shaft member 31 is formed such that the cross-sectional shape perpendicular to the rotational axis A is non-circular. For example, the cross-section of the shaft member 31 perpendicular to the rotational axis A has a shape in which both sides of a circle in the d-axis direction are cut off along the q-axis. That is, in the shaft member 31, the cross-sectional area Sq in the q-axis direction is greater than the cross-sectional area Sd in the d-axis direction, and the cross-sectional length Lq in the q-axis direction is greater than the cross-sectional length Ld in the d-axis direction by both sides of the circle in the d-axis direction being cut off.

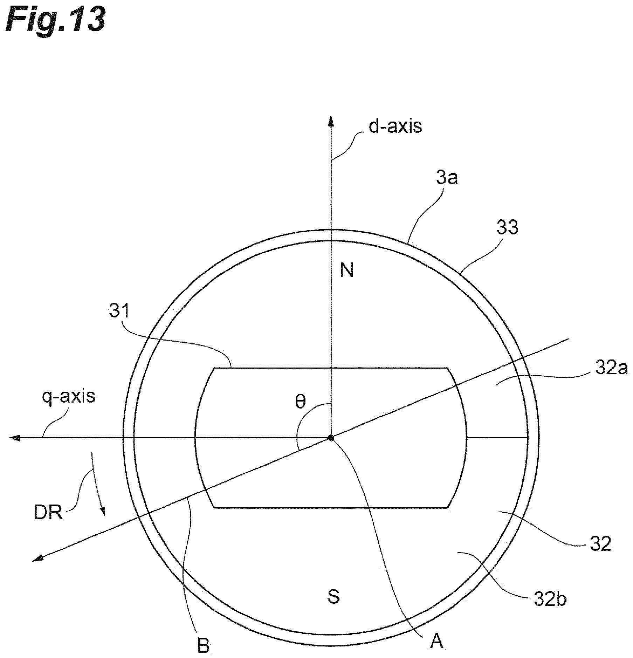

FIG. 13 is a diagram illustrating the magnetic field B generated by the stator 2. The orientation of the magnetic field B in FIG. 13 is indicated by a magnetic line of force as an exemplary orientation of the magnetic field B generated by the stator 2 (for example, a central orientation of the magnetic field B or an average orientation of the magnetic field B). In the rotating machine 1a, for example, the magnetic field B is formed in a direction preceding the q-axis direction of the rotor 3a. That is, the stator 2 forms the magnetic field B preceding the q-axis direction in the direction of rotation DR of the rotor 3a, and rotates the magnetic field B in the direction of rotation DR to rotate the rotor 3a. In FIG. 13, the direction of rotation DR is a counterclockwise direction.

In a surface magnet rotating machine (for example, a surface magnet motor), a magnetic field is generally formed oriented in the q-axis direction while being rotatably driven. This is to effectively apply magnet torque. Since almost no reluctance torque is generated in a general surface magnet rotating machine, the magnetic field is formed oriented in the q-axis direction so that the magnet torque works effectively.

In contrast, in the rotating machine 1a according to the present disclosure, the magnetic field B is formed in an orientation preceding the q-axis direction, which is the longitudinal direction of the axial cross-section of the rotor 3a, to increase reluctance torque. For example, the magnetic field B is formed such that the angle θ between the d-axis direction and the orientation of the magnetic field B is more than 90 degrees and less than 135 degrees. That is, reluctance torque can be improved by forming the magnetic field B in this manner.

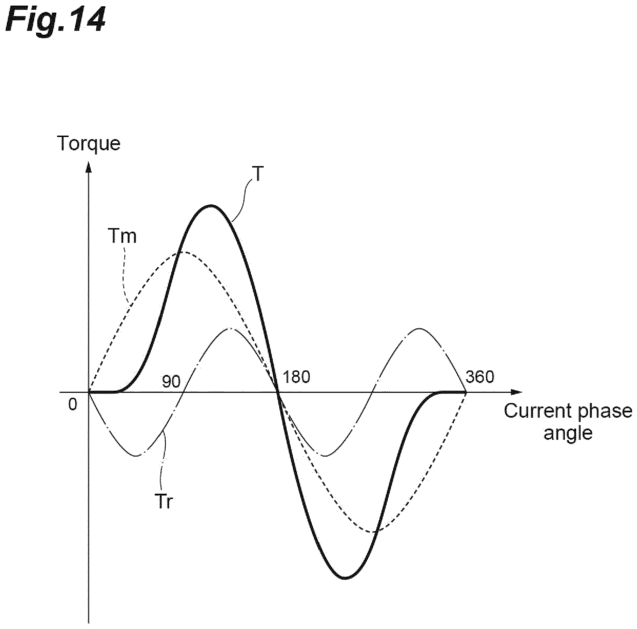

FIG. 14 is a graph illustrating an output torque of the rotating machine 1a. The vertical axis of FIG. 14 represents the output torque of the rotating machine 1a and the horizontal axis represents the current phase angle. In the current phase angle, the direction of rotation is positive relative to the d-axis. As illustrated in FIG. 14, the output torque T of the rotating machine 1a is the magnet torque Tm and the reluctance torque Tr combined. The output torque T can thus be improved by adjusting the current phase angle compared with the output of only the magnet torque Tm.

As described above, operation and effect similar to that of the rotating machine 1 according to the first embodiment can be obtained by the rotating machine 1a according to the present embodiment. That is, the ease of passage of magnetic flux can be made to be different in the d-axis direction and the q-axis direction in the shaft member 31, and be made to be different in the d-axis direction and the q-axis direction in the rotor 3a. Thus, the output of the rotating machine 1 can be improved using reluctance torque during the operation of the rotating machine 1.

In the rotating machine 1a according to the present embodiment, the shaft member 31 of the rotor 3a is formed such that the cross-sectional area Sq in the q-axis direction is greater than the cross-sectional area Sd in the d-axis direction. The passage of magnetic flux can thus be facilitated in the q-axis direction compared with the d-axis direction in the shaft member 31, and be facilitated in the q-axis direction compared with the d-axis direction in the rotor 3a. Consequently, the output of the rotating machine 1a can be improved using reluctance torque during the operation of the rotating machine 1a.

In the rotating machine 1a according to the present embodiment, the shaft member 31 of the rotor 3a is formed such that the cross-sectional length Lq in the q-axis direction is greater than the cross-sectional length Ld in the d-axis direction. The passage of magnetic flux can thus be facilitated in the q-axis direction compared with the d-axis direction in the shaft member 31, and be facilitated in the q-axis direction compared with the d-axis direction in the rotor 3a. Consequently, the output of the rotating machine 1 can be improved using reluctance torque during the operation of the rotating machine 1.

In the rotating machine 1a according to the present embodiment, the stator 2 forms the magnetic field B that rotates preceding the q-axis direction with respect to the rotor 3a to form the magnetic field B that rotates preceding the longitudinal direction of the axial cross-section. Thus, reluctance torque can be generated in the rotor 3a. Consequently, the output of the rotating machine 1a can be improved.

Although the rotating machine 1a of the second embodiment has been described above, it is not limited to the configuration described above. For example, although the shaft member 31 of the rotor 3 has a cross-sectional shape in which both sides of a circle are cut off in the second embodiment above, it may have other cross-sectional shapes. For example, the shaft member 31 may have a cross-sectional shape similar to those of the shaft members 31 illustrated in FIGS. 8 to 11. In this case, the rotor 3a is configured such that the cross-sectional area Sq in the q-axis direction is greater than the cross-sectional area Sd in the d-axis direction, or such that the cross-sectional length Lq in the q-axis direction is greater than the cross-sectional length Ld in the d-axis direction. Accordingly, operation and effect similar to that of the rotating machine 1a described above can be obtained.

A rotating machine according to a third embodiment of the present disclosure will next be described.

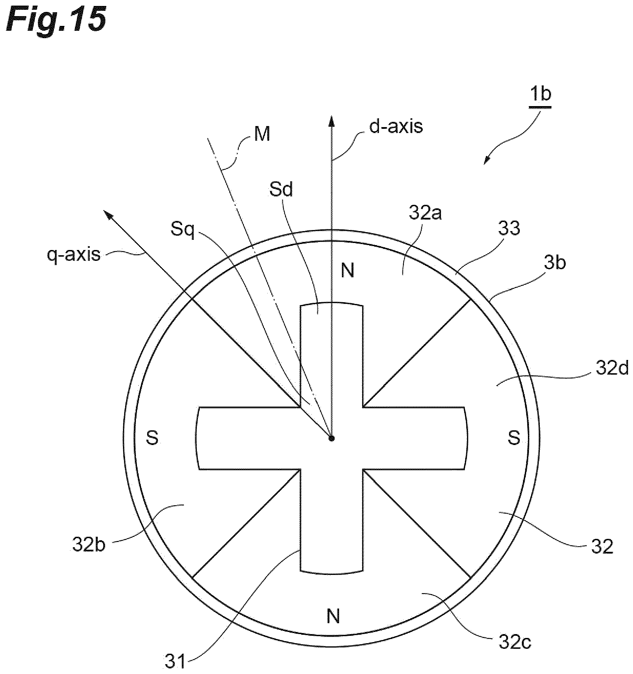

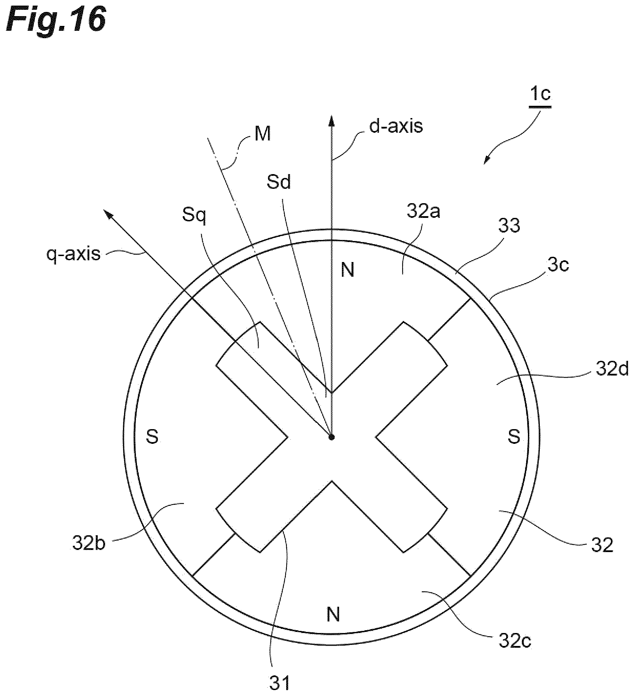

FIGS. 15 and 16 are cross-sectional views illustrating rotors of rotating machines according to the third embodiment. A rotating machine 1b and a rotating machine 1c according to the third embodiment are configured substantially the same as the rotating machine 1 according to the first embodiment. The rotating machine 1b and the rotating machine 1c are different from the rotating machine 1 in the structures of a rotor 3b and a rotor 3c. That is, although the rotating machine 1 according to the first embodiment described above includes the bipolar rotor 3, the rotating machines 1b, 1c according to the present embodiment include quadrupole rotors 3b, 3c.

As illustrated in FIG. 15, the rotating machine 1b includes the rotor 3b having four alternating opposite magnetic poles in the circumferential direction. The magnet portion 32 of the rotor 3b has magnets 32a, 32b, 32c, 32d which are divided in the circumferential direction and disposed in sequence. The magnets 32a and 32c have a north pole on the outside. The magnets 32b and 32d have a south pole on the outside. The rotor 3b has the shaft member 31 having a cruciform cross-section. The shaft member 31 is formed such that the cross-sectional area Sd in the d-axis direction is greater than the cross-sectional area Sq in the q-axis direction. The magnetic field B is formed so as to precede the d-axis direction during the operation of the rotating machine 1b. Thus, reluctance torque can be increased in addition to magnet torque.

As illustrated in FIG. 16, the rotating machine 1c includes the rotor 3c having four alternating opposite magnetic poles in the circumferential direction. The magnet portion 32 of the rotor 3c has the magnets 32a, 32b, 32c, 32d which are divided in the circumferential direction and disposed in sequence. The magnets 32a and 32c have a north pole on the outside. The magnets 32b and 32d have a south pole on the outside. The rotor 3c has the shaft member 31 having a cruciform cross-section. The shaft member 31 is formed such that the cross-sectional area Sq in the q-axis direction is greater than the cross-sectional area Sd in the d-axis direction. The magnetic field B is formed so as to precede the q-axis direction during the operation of the rotating machine 1c. Thus, reluctance torque can be increased in addition to magnet torque.

Operation and effect similar to that of the rotating machine 1 according to the first embodiment can be obtained by the rotating machines 1b, 1c according to the present embodiment. That is, the ease of passage of magnetic flux can be made to be different in the d-axis direction and the q-axis direction in the shaft member 31. The output of the rotating machines 1b, 1c can thus be improved using reluctance torque during the operation of the rotating machines 1b, 1c. Furthermore, in the case in which the shaft member 31 having a cruciform cross-section is used such as in the present embodiment, the saliency ratio can be increased, so that reluctance torque can be increased.

Although the rotating machines 1b, 1c of the third embodiment have been described above, they are not limited to the configurations described above. For example, although the shaft members 31 of the rotors 3b, 3c have a cruciform cross-sectional shape in the third embodiment described above, they may have other cross-sectional shapes. For example, the aspects of the shaft members 31 illustrated in FIGS. 8 to 11 may be applied to the shaft members 31 of the rotors 3b, 3c. In this case, the rotor is configured such that the cross-sectional area Sd in the d-axis direction is greater than the cross-sectional area Sq in the q-axis direction, or such that the cross-sectional area Sq in the q-axis direction is greater than the cross-sectional area Sd in the d-axis direction. Accordingly, operation and effect similar to that of the rotating machines 1b, 1c described above can be obtained. In particular, in a case in which the rotors 3b, 3c with four-fold rotational symmetry about the rotational axis A are used, reluctance torque can be improved by the stator 2 forming a magnetic field with two-fold rotational symmetry. Furthermore, the rotors 3b, 3c may have six, eight, or more alternating opposite magnetic poles in the circumferential direction. In this case, the shaft member 31 has a six-fold rotationally symmetric cross-sectional shape, an eight-fold rotationally symmetric cross-sectional shape, or a rotationally symmetric cross-sectional shape corresponding to the number of magnetic poles about the axis.

A rotating machine according to a fourth embodiment of the present disclosure will next be described.

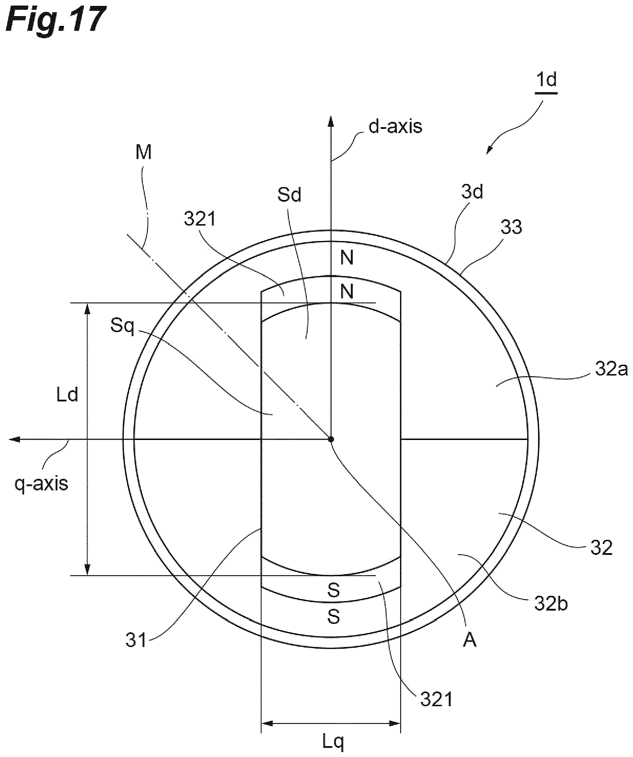

FIG. 17 is a cross-sectional view illustrating a rotor 3d of a rotating machine 1d according to the fourth embodiment. The rotating machine 1d according to the fourth embodiment is configured substantially the same as the rotating machine 1 according to the first embodiment. In the rotating machine 1d, only the structure of the magnet portion 32 is different from the rotating machine 1. That is, although the magnet portion 32 of the rotating machine 1 according to the first embodiment described above includes the magnets 32a, 32b composed of bonded magnets, the magnet portion 32 of the rotating machine 1d according to fourth embodiment includes second magnets 321 composed of sintered magnets in addition to the magnets 32a, 32b composed of bonded magnets.

The second magnets 321 are sintered magnets to enhance the magnetic force of the magnet portion 32. The second magnets 321 are disposed embedded inside the magnets 32a, 32b. For example, the second magnets 321 are provided attached to the shaft member 31 so as to contact the shaft member 31. Specifically, the second magnets 321 are respectively attached to ends of the shaft member 31 in the d-axis direction. The second magnet 321 in contact with the magnet 32a having a north pole on the outside is provided so as to have a north pole on the outside. The second magnet 321 in contact with the magnet 32b having a south pole on the outside is provided so as to have a south pole on the outside. The magnet of the magnet portion 32 can be increased and magnet torque during the operation of the rotating machine 1 can be improved by the rotor 3d being provided with the second magnets 321. The second magnets 321 are composed of sintered magnets. The second magnets 321 thus have lower electrical resistance than the magnets 32a, 32b which are bonded magnets. That is, the generation of eddy current tends to be suppressed in the magnets 32a, 32b which have high electrical resistance, and the generation of eddy current does not tend to be suppressed in the second magnets 321 which have low electrical resistance.

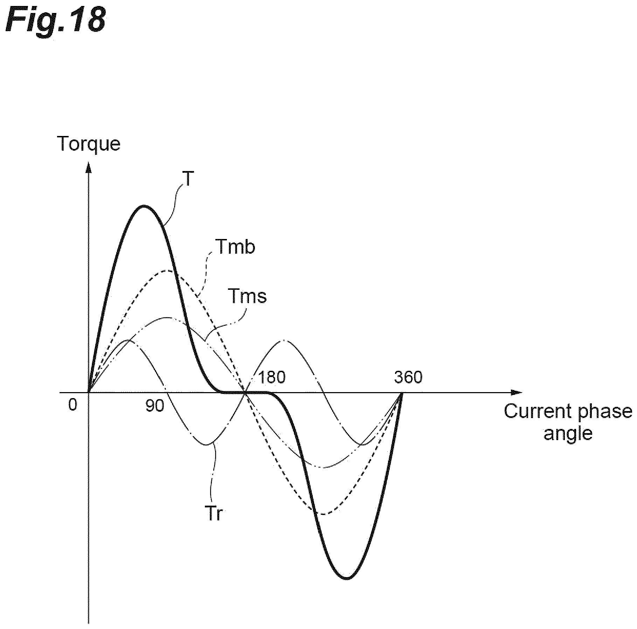

As illustrated in FIG. 18, the output torque T of the rotating machine 1d is a bonded magnet torque Tmb, a sintered magnet torque Tms, and the reluctance torque Tr combined. The output torque T improves due to the addition of the sintered magnet torque Tms. The bonded magnet torque Tmb is the magnet torque produced by the magnets 32a, 32b. The sintered magnet torque Tms is the magnet torque produced by the second magnets 321. The vertical axis of FIG. 18 represents the output torque of the rotating machine 1d and the horizontal axis represents the current phase angle. The magnetic field B preceding the d-axis direction is formed during the operation of the rotating machine 1d similarly to the rotating machine 1 according to the first embodiment.

Operation and effect similar to that of the rotating machine 1 according to the first embodiment can be obtained by the rotating machine 1d according to the present embodiment. That is, the ease of passage of magnetic flux can be made to be different in the d-axis direction and the q-axis direction in the shaft member 31. The output of the rotating machine 1 can thus be improved using reluctance torque during the operation of the rotating machine 1. In the rotating machine 1d according to the present embodiment, the shaft member 31 of the rotor 3a is formed such that the cross-sectional area Sq in the q-axis direction is greater than the cross-sectional area Sd in the d-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the output of the rotating machine 1d can be improved using reluctance torque during the operation of the rotating machine 1d. In the rotating machine 1d according to the present embodiment, the shaft member 31 of the rotor 3a is formed such that the cross-sectional length Lq in the q-axis direction is greater than the cross-sectional length Ld in the d-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the output of the rotating machine 1d can be improved using reluctance torque during the operation of the rotating machine 1d.

Additionally, in the rotating machine 1d according to the present embodiment, the magnetic force of the magnet portion 32 can be enhanced by the magnet portion 32 being provided with the second magnets 321. Furthermore, the second magnets 321 having low electrical resistance are disposed inward in a radial direction of the magnets 32a, 32b having high electrical resistance. In this case, eddy current loss can be suppressed since the magnets 32a, 32b having high electrical resistance are disposed in the vicinity of an outer circumference of the rotor 3d. Furthermore, the second magnets 321 are not exposed to a large flux change since the second magnets 321 having low electrical resistance are disposed inward in a radial direction of the rotor 3d. Thus, the magnetic force of the magnet portion 32 can be enhanced while suppressing the occurrence of eddy current loss.

Although the rotating machine 1d of the fourth embodiment has been described above, it is not limited to the configuration described above. For example, the aspects of the shaft members 31 illustrated in FIGS. 8 to 11 may be applied to the rotating machine 1d.

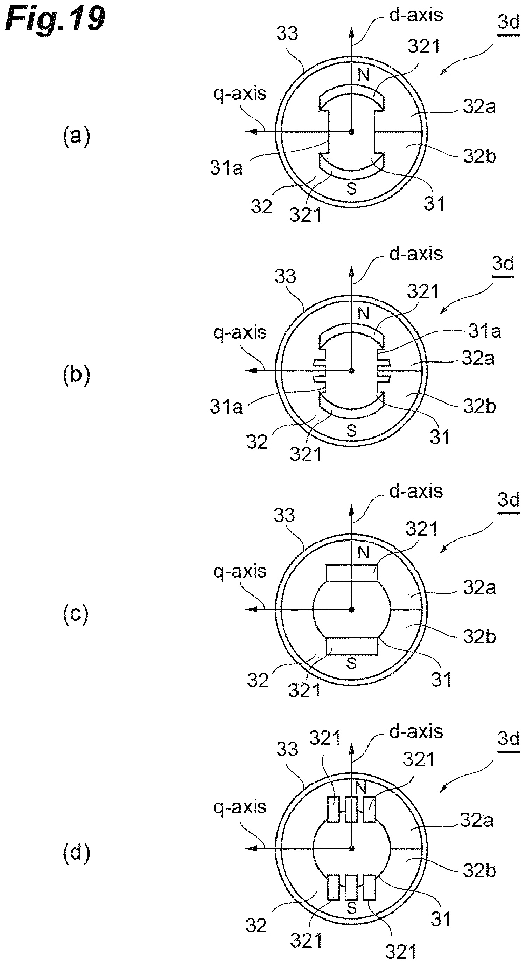

Specifically, as illustrated in FIG. 19(a), the shaft member 31 of the rotor 3 may have a cross-sectional shape in which the recessed portion 31a that is recessed inward is formed on each side of a circle. That is, the recessed portions 31a that are recessed inward along the q-axis direction may be formed in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the fourth embodiment described above. Additionally, output torque can be improved since magnet torque is enhanced due to the installation of the second magnets 321.

As illustrated in FIG. 19(b), a plurality of the recessed portions 31a that are recessed inward may be formed on each side of a circle in the cross-section of the shaft member 31. For example, three recessed portions 31a recessed inward along the q-axis direction may be formed on each side of the circle in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the fourth embodiment described above. Additionally, output torque can be improved since magnet torque is enhanced due to the installation of the second magnets 321.

As illustrated in FIG. 19(c), the shaft member 31 of the rotor 3 may be provided with the second magnet 321 so as to project outward on each side of a circle. That is, the second magnets 321 may be formed so as to project outward along the d-axis direction in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the fourth embodiment described above. Additionally, output torque can be improved since magnet torque is enhanced due to the installation of the second magnets 321.

As illustrated in FIG. 19(d), a plurality of the second magnets 321 projecting outward may be formed on each side of a circle in the cross-section of the shaft member 31. For example, three second magnets 321 projecting outward along the d-axis direction may be formed on each side of the circle in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved since magnet torque is enhanced due to the installation of the second magnets 321.

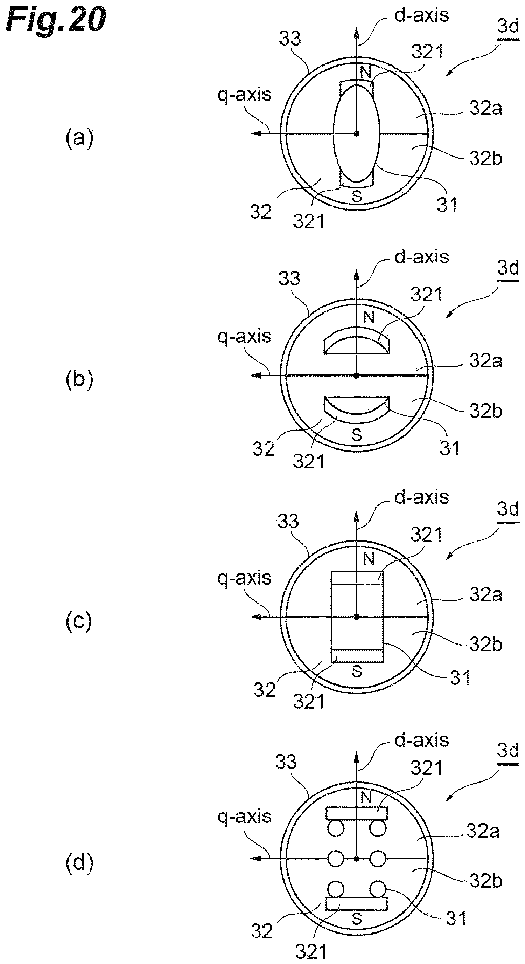

As illustrated in FIG. 20(a), the shaft member 31 of the rotor 3 may have an elliptical cross-sectional shape. That is, the cross-sectional shape of the shaft member 31 may be elliptical with the major axis oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved since magnet torque is enhanced due to the installation of the second magnets 321.

As illustrated in FIG. 20(b), the shaft member 31 of the rotor 3 may have a cross-sectional shape in which the through hole 31c is formed extending in the q-axis direction. That is, the through hole 31c extending in the q-axis direction is formed so as to pass through the center of a circle in the cross-section of the shaft member 31. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved since magnet torque is enhanced due to the installation of the second magnets 321.

As illustrated in FIG. 20(c), the shaft member 31 of the rotor 3 may have a rectangular cross-sectional shape. For example, the cross-sectional shape of the shaft member 31 may be rectangular with the long sides oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved due to the enhanced magnet torque.

As illustrated in FIG. 20(d), the shaft member 31 of the rotor 3 may be composed of the plurality of shafts 31d. For example, the plurality of shafts 31d are disposed such that the cross-sectional area in the d-axis direction is greater than the cross-sectional area in the q-axis direction, and the cross-sectional length in the d-axis direction is greater than the cross-sectional length in the q-axis direction in the cross-section of the shaft member 31. For example, six shafts 31d are arranged: three along the d-axis direction and two along the q-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved due to the enhanced magnet torque. The cross-sectional shape of the shafts 31d may be other than circular.

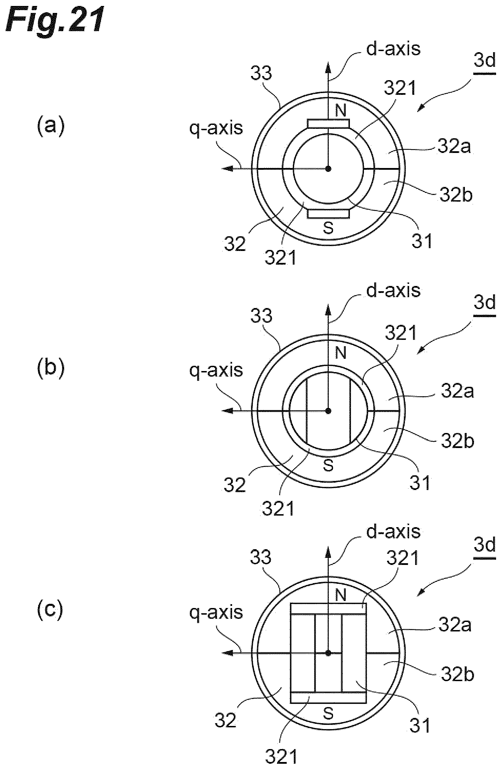

As illustrated in FIG. 21(a), the shaft member 31 of the rotor 3 may have a configuration in which the magnetic member 31e is provided outside a circle. For example, the shaft member 31 may have one magnetic member 31e in each position outside the circle spaced in the d-axis direction. A plurality of the magnetic members 31e may be formed on both sides of the circular cross-section. The second magnet 321 is annularly formed between the central circular shaft member 31 and the magnetic members 31e. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved due to the enhanced magnet torque. The cross-sectional shape of the magnetic members 31e may be other than rectangular.

As illustrated in FIG. 21(b), the shaft member 31 of the rotor 3 may have a cross-sectional shape in which both sides of a circle are cut off, and may have a configuration in which the non-magnetic bodies 31f are attached to the portions that are cut off. That is, the shaft member 31 has a configuration in which the non-magnetic bodies 31f are attached to both sides in the q-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved due to the enhanced magnet torque. Furthermore, the shaft member 31 can be reinforced by having the non-magnetic bodies 31f attached to the shaft member 31, so that the strength of the shaft member 31 can be increased.

As illustrated in FIG. 21(c), the shaft member 31 of the rotor 3 may have a plurality of rectangular cross-sectional shapes. That is, the cross-sectional shape of the shaft member 31 may be two rectangles with the long sides oriented in the d-axis direction. Even in this case, the shaft member 31 has a cross-sectional area in the d-axis direction greater than the cross-sectional area in the q-axis direction, and a cross-sectional length in the d-axis direction greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. Consequently, the passage of magnetic flux is facilitated along the d-axis direction and reluctance torque can be increased similarly to the first embodiment described above. Additionally, output torque can be improved due to the enhanced magnet torque.

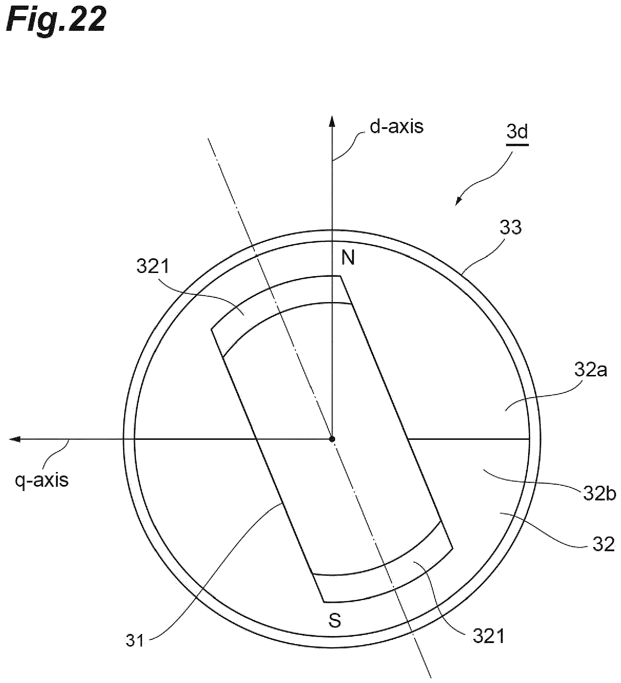

In the fourth embodiment described above, the longitudinal direction of the shaft member 31 is configured to be oriented in the d-axis direction in the cross-section of the rotor 3d, but it need not be configured in this manner. For example, the longitudinal direction of the shaft member 31 may be oriented in a direction offset from the d-axis direction in the cross-section of the rotor 3 as illustrated in FIG. 22. Even in this case, the shaft member 31 is formed such that the cross-sectional area in the d-axis direction is greater than the cross-sectional area in the q-axis direction, and such that the cross-sectional length in the d-axis direction is greater than the cross-sectional length in the q-axis direction. The passage of magnetic flux can thus be facilitated in the d-axis direction compared with the q-axis direction in the shaft member 31, and be facilitated in the d-axis direction compared with the q-axis direction in the rotor 3d. As a result, the passage of magnetic flux is facilitated along the d-axis direction and reluctance torque can be increased similarly to the first embodiment described above. Additionally, output torque can be improved due to the enhanced magnet torque. The longitudinal direction in the cross-section of the shaft members 31 illustrated in FIGS. 19 to 21 may also be oriented in a direction offset from the d-axis direction.

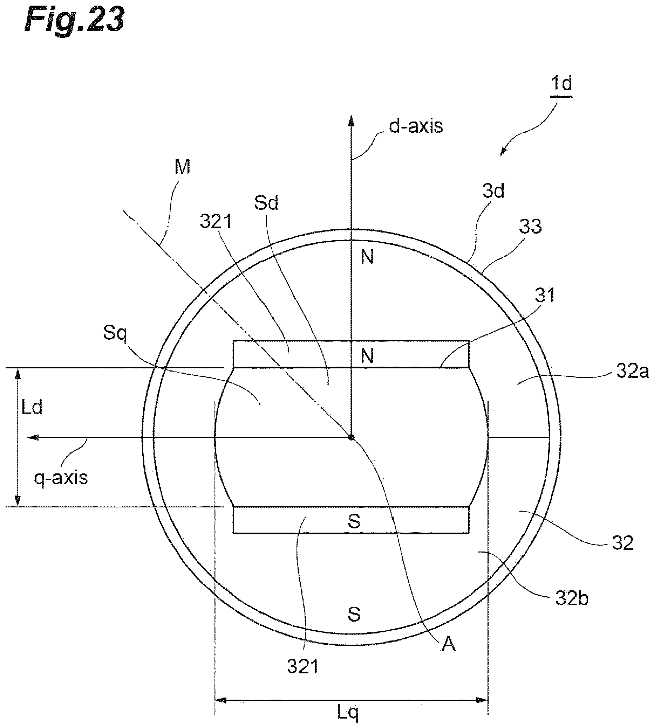

In the fourth embodiment described above, the shaft member 31 the rotor 3d of the rotating machine 1d is formed such that the cross-sectional area Sd in the d-axis direction is greater than the cross-sectional area Sq in the q-axis direction, and such that the cross-sectional length Ld in the d-axis direction is greater than the cross-sectional length Lq in the q-axis direction as illustrated in FIG. 17. The shaft member 31 may be formed such that the cross-sectional area Sq in the q-axis direction is greater than the cross-sectional area Sd in the d-axis direction, and such that the cross-sectional length Lq in the q-axis direction is greater than the cross-sectional length Ld in the d-axis direction. For example, the shaft member 31 is formed such that the cross-section perpendicular to the rotational axis A is non-circular as illustrated in FIG. 23. For example, the cross-section of the shaft member 31 has a shape in which both sides of a circle in the d-axis direction are cut off along the q-axis. That is, in the shaft member 31, the cross-sectional area Sq in the q-axis direction is greater than the cross-sectional area Sd in the d-axis direction, and the cross-sectional length Lq in the q-axis direction is greater than the cross-sectional length Ld in the d-axis direction by both sides of the circle in the d-axis direction being cut off. The magnet portion 32 is provided with the second magnets 321 composed of sintered magnets in addition to the magnets 32a, 32b composed of bonded magnets. The second magnets 321 are sintered magnets to enhance the magnetic force of the magnet portion 32. The second magnets 321 are disposed embedded inside the magnets 32a, 32b. For example, the second magnets 321 are provided attached to the shaft member 31 so as to contact the shaft member 31. Specifically, the second magnets 321 are respectively attached to the ends of the shaft member 31 in the d-axis direction. The second magnet 321 in contact with the magnet 32a having a north pole on the outside is provided so as to have a north pole on the outside. The second magnet 321 in contact with the magnet 32b having a south pole on the outside is provided so as to have a south pole on the outside. The magnet of the magnet portion 32 can be increased and magnet torque during the operation of the rotating machine 1d can be improved by the rotor 3d being provided with the second magnets 321. The second magnets 321 have lower electrical resistance than the magnets 32a, 32b which are bonded magnets by being composed of sintered magnets. That is, the generation of eddy current tends to be suppressed in the magnets 32a, 32b which have high electrical resistance, and the generation of eddy current does not tend to be suppressed in the second magnets 321 which have low electrical resistance.

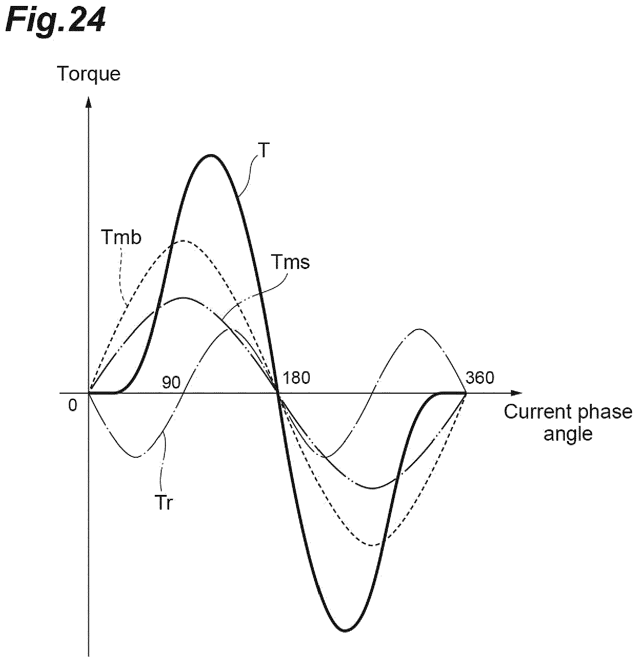

As illustrated in FIG. 24, the output torque T of the rotating machine 1d of FIG. 23 is the bonded magnet torque Tmb, the sintered magnet torque Tms, and the reluctance torque Tr combined. The output torque T improves due to the addition of the sintered magnet torque Tms. The bonded magnet torque Tmb is the magnet torque produced by the magnets 32a, 32b. The sintered magnet torque Tms is the magnet torque produced by the second magnets 321. The vertical axis of FIG. 24 represents the output torque of the rotating machine 1d and the horizontal axis represents the current phase angle. The magnetic field B preceding the q-axis direction is formed during the operation of the rotating machine 1d similarly to the rotating machine 1a according to the second embodiment.

Operation and effect similar to that of the rotating machine 1d according to the fourth embodiment described above can be obtained by such rotating machine 1d. That is, the output of the rotating machine 1d can be improved using reluctance torque during the operation of the rotating machine 1d. Additionally, the magnetic force of the magnet portion 32 can be enhanced by the magnet portion 32 being provided with the second magnets 321. Additionally, eddy current loss can be suppressed by the second magnets 321 having low electrical resistance being disposed inward in the radial direction of the magnets 32a, 32b having high electrical resistance. Furthermore, the second magnets 321 are not exposed to a large flux change since the second magnets 321 having low electrical resistance are disposed inward in the radial direction of the rotor 3d. Thus, the magnetic force of the magnet portion 32 can be enhanced while suppressing the occurrence of eddy current loss.

The shaft members 31 illustrated in FIGS. 19 to 21 may also be formed such that the cross-sectional area Sq in the q-axis direction is greater than the cross-sectional area Sd in the d-axis direction, and such that the cross-sectional length Lq in the q-axis direction is greater than the cross-sectional length Ld in the d-axis direction. Even in these cases, the ease of passage of magnetic flux can be made to be different in the d-axis direction and the q-axis direction in the shaft member 31. Consequently, the output of the rotating machine 1d can be improved using reluctance torque during the operation of the rotating machine 1d.

Although the fourth embodiment described above includes the bipolar rotor 3d as illustrated in FIG. 17, it may include a quadrupole rotor. For example, the rotating machine 1d may include the rotor 3d having four alternating opposite magnetic poles in the circumferential direction. That is, the magnet portion 32 of the rotor 3d may have four magnets disposed divided in the circumferential direction. The rotor 3b may have the shaft member 31 having a cruciform cross-section. Even in this case, reluctance torque can be increased by the shaft member 31 being formed such that the cross-sectional area Sd in the d-axis direction is greater than the cross-sectional area Sq in the q-axis direction similarly to the fourth embodiment described above. Furthermore, the rotor 3d may have six, eight, or more opposite magnetic poles in the circumferential direction. In this case, the shaft member 31 has a six-fold rotationally symmetric cross-sectional shape, an eight-fold rotationally symmetric cross-sectional shape, or a rotationally symmetric cross-sectional shape corresponding to the number of magnetic poles about the axis.

A rotating machine according to a fifth embodiment of the present disclosure will next be described.

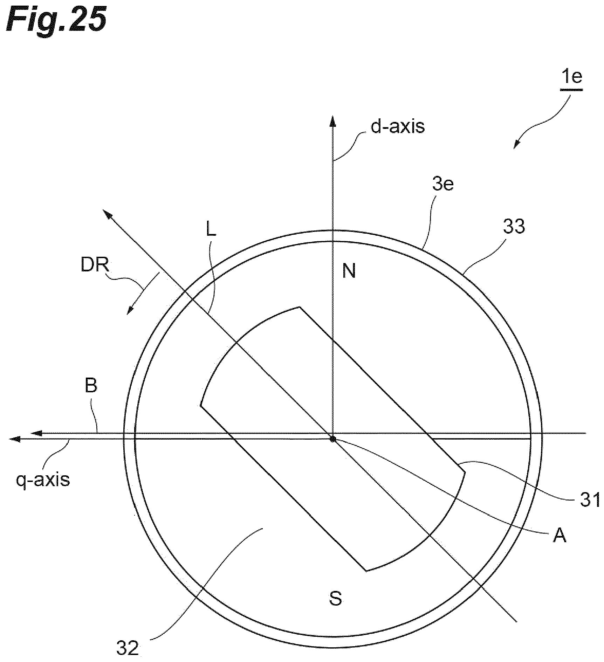

FIG. 25 is a cross-sectional view of a rotor 3e of a rotating machine 1e according to the fifth embodiment. The rotating machine 1e according to the fifth embodiment is configured substantially the same as the rotating machine 1 according to the first embodiment. In the rotating machine 1e, only the structure of the rotor 3e is different from the rotating machine 1. The shaft member 31 of the rotor 3 of the rotating machine 1 according to the first embodiment described above is formed such that the cross-sectional area Sd in the d-axis direction is greater than the cross-sectional area Sq in the q-axis direction, and such that the cross-sectional length Ld in the d-axis direction is greater than the cross-sectional length Lq in the q-axis direction. However, unlike the rotor 3 of the rotating machine 1 according to the first embodiment, the shaft member 31 of the rotor 3e of the rotating machine 1e according to the fifth embodiment is formed such that the ease of passage of magnetic flux is at a maximum in an angular direction between the d-axis direction and the q-axis direction in the cross-section perpendicular to the rotational axis A. For example, the stator 2 illustrated in FIG. 1 can be used in the rotating machine 1e according to the present embodiment. The rotating machine 1e is driven by the electrical configuration illustrated in FIG. 4 and the operation control illustrated in FIG. 6.

The shaft member 31 is non-circular in the cross-section perpendicular to the rotational axis A. The shaft member 31 is formed so as to be long in the angular direction between the d-axis direction and the q-axis direction. For example, the shaft member 31 is formed such that both sides of a circle are cut off along straight lines in the cross-section perpendicular to the rotational axis A. As a result, the shaft member 31 is formed so as to be long in the angular direction between the d-axis direction and the q-axis direction. The cross-sectional shape of the shaft member 31 may be formed so as to be long in an intermediate angular direction between the d-axis direction and the q-axis direction. That is, when the angle between the d-axis and the q-axis is 90 degrees, the angle between a longitudinal direction L of the shaft member 31 and the d-axis may be 45 degrees. The ease of passage of magnetic flux is thus at a maximum in the angular direction between the d-axis direction and the q-axis direction by the shaft member 31 being formed so as to be long in the angular direction between the d-axis direction and the q-axis direction. The ease of passage of magnetic flux is at a maximum in the intermediate angular direction between the d-axis direction and the q-axis direction by the shaft member 31 being formed so as to be long in the intermediate angular direction between the d-axis direction and the q-axis direction.

In the rotating machine 1e, for example, the magnetic field B is formed in the q-axis direction of the magnet portion 32 as illustrated in FIG. 25. That is, the stator 2 forms the magnetic field B in the q-axis direction, and rotates the magnetic field B in the direction of rotation DR to rotate the rotor 3e. In FIG. 25, the direction of rotation DR is the direction in which the rotor 3e rotates, and is here a counterclockwise direction. In the rotating machine 1e, reluctance torque can be generated in addition to magnet torque by the magnetic field B being formed oriented in the q-axis direction. Thus, output torque can be improved.

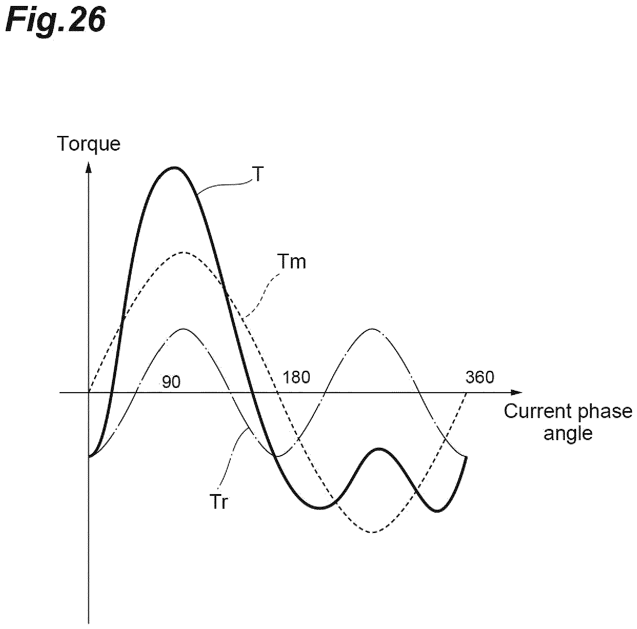

FIG. 26 is a graph illustrating an output torque of the rotating machine 1e. The vertical axis of FIG. 26 represents the output torque of the rotating machine 1e and the horizontal axis represents the current phase angle. As illustrated in FIG. 26, the output torque T of the rotating machine 1e is the magnet torque Tm and the reluctance torque Tr combined. The output torque T can thus be improved by adjusting the current phase angle compared with the output of only the magnet torque Tm. It can be seen that when the current phase angle is 90 degrees, that is, when the magnetic field B is formed in the q-axis direction which is 90 degrees from the d-axis, the output torque of the rotating machine 1e is at a maximum.

As described above, in the rotating machine 1e according to the present embodiment, the shaft member 31 is formed such that the ease of passage of magnetic flux is at a maximum in the angular direction between the d-axis direction and the q-axis direction in the cross-section perpendicular to the rotational axis A. Reluctance torque can thus be generated. The shaft member 31 may be formed such that the ease of passage of magnetic flux is at a maximum in the intermediate angular direction between the d-axis direction and the q-axis direction. In this case, reluctance torque can be effectively improved.

In the rotating machine 1e according to the present embodiment, the magnetic field B is formed oriented in the q-axis direction, and the rotor 3e rotates due to the rotation of the magnetic field B. Thus, a large magnet torque is obtained and reluctance torque increases. Consequently, the output of the rotating machine 1e can be significantly improved.

Although the rotating machine 1e of the fifth embodiment has been described above, it is not limited to the configuration described above. For example, although in the fifth embodiment above, the shaft member 31 of the rotor 3e has a cross-sectional shape in which both sides of a circle are cut off, it may have other cross-sectional shapes. For example, the shaft member 31 may have a shape similar to those of the shaft members 31 illustrated in FIGS. 8 to 11. For example, the shaft member 31 may have a shape similar to those of the shaft members 31 illustrated in FIGS. 15 to 17 and FIGS. 19 to 21. Even in these cases, operation and effect similar to that of the rotating machine 1e described above can be obtained by the shaft member 31 being formed such that the ease of passage of magnetic flux is at a maximum in the angular direction between the d-axis direction and the q-axis direction in the cross-section perpendicular to the rotational axis A.

The configuration of the magnet portion 32 is not limited to the forms described above. For example, the magnet portion 32 may be composed of an annularly connected member, or may be formed such that the outward north pole and south pole appear alternately in the circumferential direction. The number of magnetic poles of the magnet portion 32 may be different from the number of magnets constituting the magnet portion 32. For example, in a case in which the number of magnetic poles of the magnet portion 32 is four, the magnet portion 32 may be composed of four or more magnets bonded in the circumferential direction.

A rotating machine according to a sixth embodiment of the present disclosure will next be described.

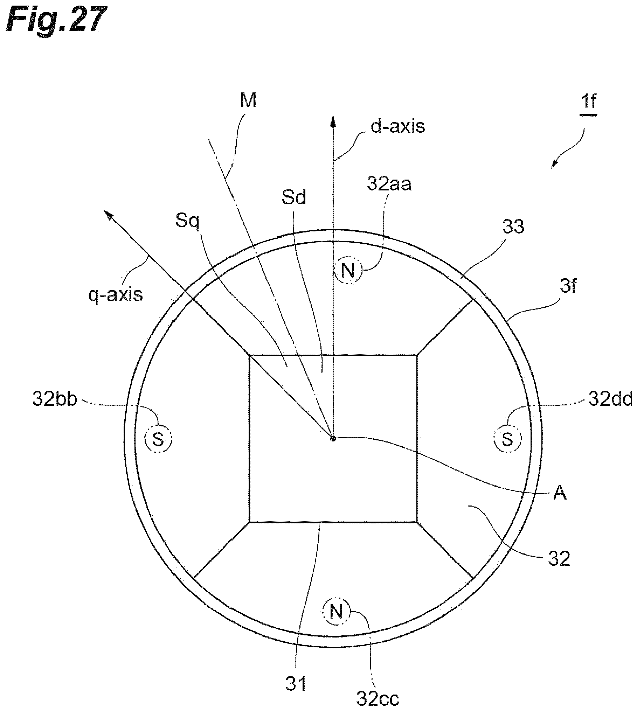

FIG. 27 is a cross-sectional view of a rotor of a rotating machine according to the sixth embodiment. A rotating machine 1f according to the sixth embodiment is different from the rotating machine 1 in the structure of a rotor 3f. The rotating machine 1 according to the first embodiment described above includes the bipolar rotor 3. However, the rotating machine 1f according to the present embodiment includes the quadrupole rotor 3f.

As illustrated in FIG. 27, the rotating machine 1f includes the rotor 3f provided with four alternating opposite magnetic poles in the circumferential direction. The magnet portion 32 of the rotor 3f has magnetic poles 32aa, 32bb, 32cc, 32dd which are disposed sequentially in the circumferential direction. The magnetic poles 32aa and 32cc have a north pole on the outside. The magnetic poles 32bb and 32dd have a south pole on the outside. In this embodiment, four magnets arranged along the circumferential direction constitute the magnetic poles 32aa, 32bb, 32cc, 32dd which are disposed sequentially in the circumferential direction. However, the configuration of the magnet portion 32 is not limited to the form described above. For example, the magnet portion 32 may be composed of an annularly connected member, or may be formed such that the outward north pole and south pole appear alternately in the circumferential direction. Alternatively, the magnet portion 32 may be composed of four or more magnets bonded in the circumferential direction with the number of magnetic poles of the magnet portion 32 kept to four.

The rotor 3f includes the shaft member 31 having a rectangular cross-sectional shape. The shaft member 31 is, for example, square-shaped in the cross-section perpendicular to the rotational axis A. The four corners of the shaft member 31 may be chamfered or rounded in the cross-section. Alternatively, the four corners of the shaft member 31 need not be chamfered or rounded. As illustrated in FIG. 27, a diagonal line of the shaft member 31 (that is, a line connecting one of four vertices of the shaft member 31 to a diagonally opposite vertex) is disposed so as to coincide with the q-axis. Thus, a direction of extension of the diagonal line of the shaft member 31 matches the q-axis direction. As a result, the q-axis passes through a corner of the shaft member 31, and the d-axis passes through a side (that is, a line connecting two corners) of the shaft member 31. The d-axis is perpendicular to the side of the shaft member 31. In this case, the cross-sectional area in the q-axis direction is greater than the cross-sectional area in the d-axis direction in the cross-section of the shaft member 31 perpendicular to the rotational axis A. For example, when the intermediate line M is set passing through the middle of the d-axis and the q-axis, the cross-sectional area Sq between the q-axis and the intermediate line M is greater than the cross-sectional area Sd between the d-axis and the intermediate line M in the cross-section of the shaft member 31.

The intermediate line M is an imaginary line that bisects a central angle defined by the rotational axis A, the d-axis, and the q-axis. The cross-sectional area in the d-axis direction may be the cross-sectional area Sd which is a region between the d-axis and the intermediate line M in the cross-section of the shaft member 31. The cross-sectional area in the q-axis direction may be the cross-sectional area Sq which is a region between the q-axis and the intermediate line M in the cross-section of the shaft member 31. Additionally, the length in the q-axis direction is greater than the length in the d-axis direction in the cross-section of the shaft member 31. The length in the d-axis direction is, for example, the length from an intersection between the d-axis and the surface of the shaft member 31 to the rotational axis A. The length in the q-axis direction is, for example, the length from an intersection between the q-axis and the surface of the shaft member 31 to the rotational axis A.

As a result, the passage of magnetic flux is facilitated in the q-axis direction compared with the d-axis direction in the shaft member 31, and is facilitated in the q-axis direction compared with the d-axis direction in the rotor 3f. Similarly to the embodiments described above, the shaft member 31 is formed of a material having a higher permeability than the magnet portion 32, that is, a material which facilitates the passage of magnetic flux compared with the magnet portion 32. Reluctance torque can be generated in addition to magnet torque by the magnetic field B being formed so as to precede the q-axis in the direction of rotation during the operation of the rotating machine 1f. Furthermore, in the case in which the shaft member 31 having a square cross-sectional shape is used, the machining of the rotor 3f is facilitated which improves the manufacturability of the rotor 3f.

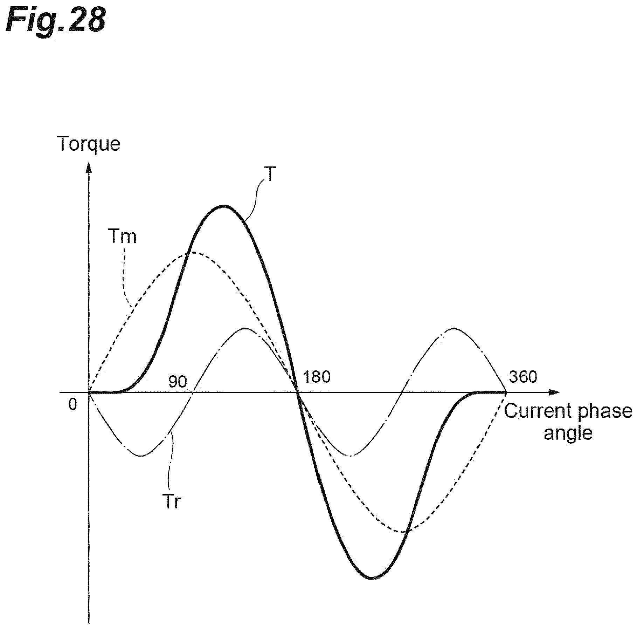

FIG. 28 is a graph illustrating an output torque of the rotating machine 1f. The vertical axis of FIG. 28 represents the output torque of the rotating machine 1f and the horizontal axis represents the current phase angle. In the current phase angle, the direction of rotation is positive relative to the d-axis. As illustrated in FIG. 28, the output torque T of the rotating machine 1f is the magnet torque Tm and the reluctance torque Tr combined. In this case, the output torque T can be improved by adjusting the current phase angle compared with the output of only the magnet torque Tm.

Operation and effect similar to that of the rotating machine 1 according to the first embodiment can be obtained by the rotating machine 1f according to the present embodiment. That is, the ease of passage of magnetic flux can be made to be different in the d-axis direction and the q-axis direction in the shaft member 31, and can be made to be different in the d-axis direction and the q-axis direction in the rotor 3f. Consequently, the output of the rotating machine 1f can be improved using reluctance torque during the operation of the rotating machine 1f.

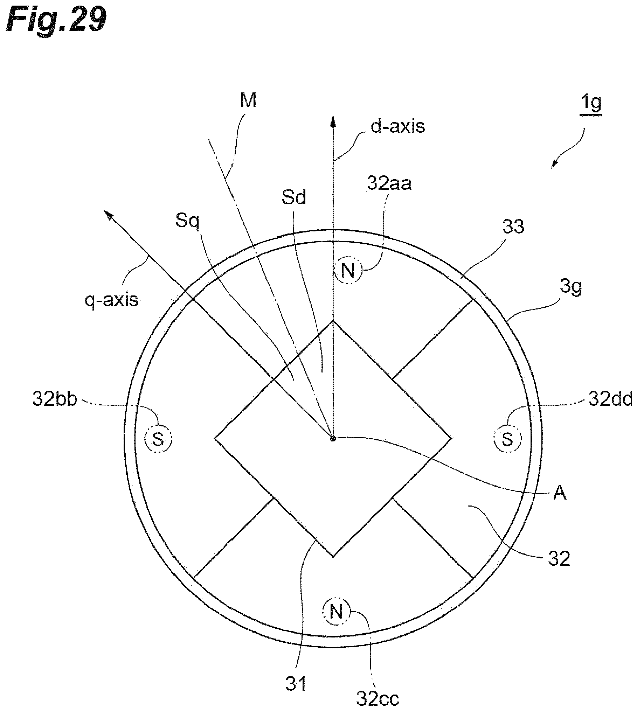

Although the sixth embodiment of the present disclosure has been described above, the rotating machine of the present disclosure is not limited to the rotating machine 1f of the sixth embodiment described above. For example, as illustrated in FIG. 29, the diagonal line of the shaft member 31 of a rotor 3g may be disposed so as to coincide with the d-axis and not the q-axis. In this case, the direction of extension of the diagonal line of the shaft member 31 matches the d-axis direction. As a result, the d-axis passes through a corner of the shaft member 31, and the q-axis passes through a side (that is, a line connecting two corners) of the shaft member 31. The q-axis is perpendicular to the side of the shaft member 31. In this configuration, the cross-sectional area in the d-axis direction is greater than the cross-sectional area in the q-axis direction in the cross-section of the shaft member 31 perpendicular to the rotational axis A. For example, when the intermediate line M is set passing through the middle of the d-axis and the q-axis, the cross-sectional area Sd between the d-axis and the intermediate line M is greater than the cross-sectional area Sq between the q-axis and the intermediate line M in the cross-section of the shaft member 31. Additionally, the length in the d-axis direction is greater than the length in the q-axis direction in the cross-section of the shaft member 31.

As a result, the passage of magnetic flux is facilitated in the d-axis direction compared with the q-axis direction in the shaft member 31, and is facilitated in the d-axis direction compared with the q-axis direction in the rotor 3g. Reluctance torque can be generated in addition to magnet torque by the magnetic field B being formed so as to precede the d-axis direction in the direction of rotation during the operation of the rotating machine 1g.

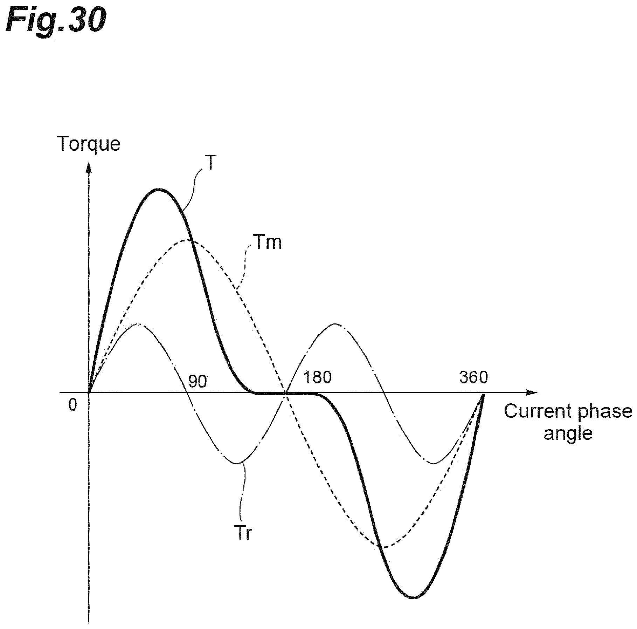

FIG. 30 is a graph illustrating an output torque of the rotating machine 1g. The vertical axis of FIG. 30 represents the output torque of the rotating machine 1g and the horizontal axis represents the current phase angle. In the current phase angle, the direction of rotation is positive relative to the d-axis. As illustrated in FIG. 30, the output torque T of the rotating machine 1g is the magnet torque Tm and the reluctance torque Tr combined. In this case, the output torque T can be improved by adjusting the current phase angle compared with the output of only the magnet torque Tm.

Operation and effect similar to that of the rotating machine 1 according to the first embodiment can be obtained even by such rotating machine 1g. That is, the ease of passage of magnetic flux can be made to be different in the d-axis direction and the q-axis direction in the shaft member 31, and can be made to be different in the d-axis direction and the q-axis direction in the rotor 3g. Consequently, the output of the rotating machine 1g can be improved using reluctance torque during the operation of the rotating machine 1g.

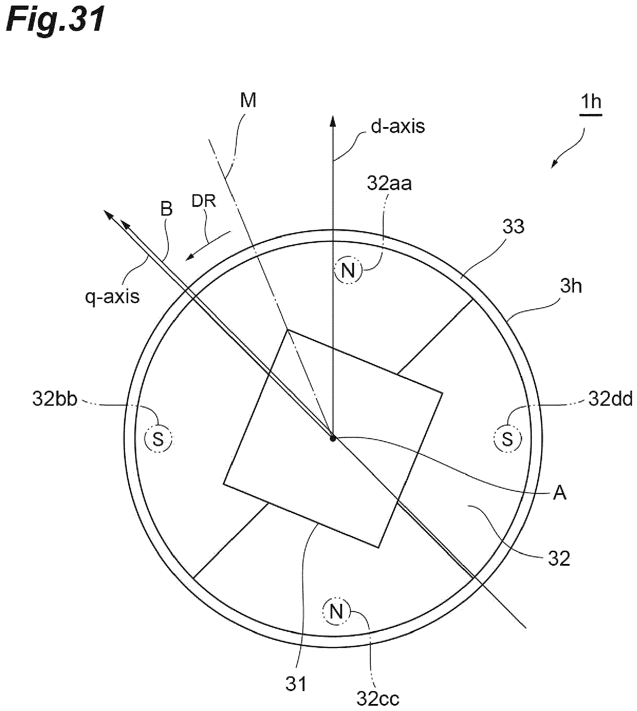

As illustrated in FIG. 31, the diagonal line of the shaft member 31 of a rotor 3h may be disposed so as to coincide with the intermediate line M passing through the middle of the d-axis and the q-axis. That is, the direction of extension of the diagonal line of the shaft member 31 may match the direction of extension of the intermediate line M. As a result, the q-axis passes through one side of the shaft member 31, and the d-axis passes through another side of the shaft member 31 different from the one side of the shaft member 31. The one side of the shaft member 31 through which the q-axis passes is inclined from a direction perpendicular to the q-axis. The other side of the shaft member 31 through which the d-axis passes is inclined from a direction perpendicular to the d-axis. When the angle between the d-axis and the q-axis is 90 degrees, the angle between the diagonal line of the shaft member 31 and the d-axis and the angle between the diagonal line of the shaft member 31 and the q-axis are 45 degrees. In this case, the cross-sectional shape of the shaft member 31 is long in the direction in which the intermediate line M between the d-axis direction and the q-axis direction extends. In such rotor 3h, the ease of passage of magnetic flux is at a maximum in the direction in which the intermediate line M extends.

In the rotating machine 1h, for example, the magnetic field B is formed in the q-axis direction of the magnet portion 32. That is, the stator 2 forms the magnetic field B in the q-axis direction, and rotates the magnetic field B in the direction of rotation DR to rotate the rotor 3h. The direction of rotation DR is the direction in which the rotor 3h rotates, and is here a counterclockwise direction. In the rotating machine 1h, reluctance torque can be generated in addition to magnet torque by the magnetic field B being formed oriented in the q-axis direction. Thus, output torque can be improved.

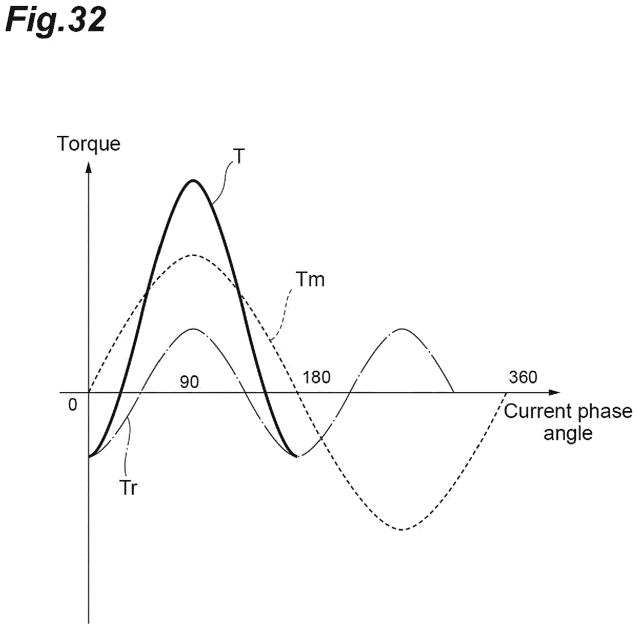

FIG. 32 is a graph illustrating an output torque of the rotating machine 1h. The vertical axis of FIG. 32 represents the output torque of the rotating machine 1h and the horizontal axis represents the current phase angle. In the current phase angle, the direction of rotation is positive relative to the d-axis. As illustrated in FIG. 32, the output torque T of the rotating machine 1h is the magnet torque Tm and the reluctance torque Tr combined. In this case, the output torque T can be improved by adjusting the current phase angle compared with the output of only the magnet torque Tm. As illustrated in FIG. 32, it can be seen that when the current phase angle is 90 degrees, that is, when the magnetic field B is formed in the q-axis direction which is 90 degrees from the d-axis, the output torque of the rotating machine 1h is at a maximum.

As described above, in the rotating machine 1h, the shaft member 31 is formed such that the ease of passage of magnetic flux is at a maximum in the direction of extension of the intermediate line M between the d-axis and the q-axis. Reluctance torque can thus be effectively improved. In the rotating machine 1h, the magnetic field B is formed oriented in the q-axis direction, and the rotor 3h rotates due to the rotation of the magnetic field B. Consequently, a large magnet torque is obtained and reluctance torque increases. As a result, the output of the rotating machine 1h can be significantly improved.

Many other variations of the rotating machine of the present disclosure are possible. For example, the aspects of the shaft members 31 illustrated in FIGS. 8 to 11 may be applied to the shaft members 31 of the rotors 3f, 3g, 3h. In these cases, the rotor is configured such that the cross-sectional area Sd in the d-axis direction is greater than the cross-sectional area Sq in the q-axis direction, or such that the cross-sectional area Sq in the q-axis direction is greater than the cross-sectional area Sd in the d-axis direction. Accordingly, operation and effect similar to that of the rotating machines 1f, 1g, 1h described above can be obtained. In particular, in the case in which the rotors 3f, 3g, 3h with four-fold rotational symmetry about the rotational axis A are used, reluctance torque can be improved by the stator 2 forming a magnetic field with two-fold rotational symmetry. The rotating machine of the present disclosure is not limited to having a quadrupole rotor, but may include a multipolar rotor such as a hexapole or octupole rotor. For example, in the case in which the rotating machine includes a hexapole rotor, the cross-sectional shape of the shaft member 31 in the cross-section perpendicular to the rotational axis A may be hexagonal. In a case in which the rotating machine includes an octupole rotor, the cross-sectional shape of the shaft member 31 in the cross-section perpendicular to the rotational axis A may be octagonal.

Although the rotating machines according to the embodiments of the present disclosure have been described above, the rotating machine of the present disclosure is not limited to the configurations described above. The rotating machine of the present disclosure can be implemented with many variations without departing from the gist of the scope of the claims.

For example, although the embodiments above describe a rotating machine using the stator 2 in which three teeth 21a are formed, the rotating machine may use a stator in which the number of the teeth formed is other than three.

A rotor other than a bipolar or quadrupole rotor may be used as the rotor 3. For example, the rotating machine may include a hexapole or higher multipole rotor.

Although the embodiments described above use the rotor 3 including the sleeve 33, a rotor that does not include the sleeve 33 may be used.

Although the embodiments above describe the case in which the rotating machine is applied to an electric motor, the rotating machine may be applied to other devices. For example, the rotating machine may be applied to a generator or a motor generator.

### Reference Signs List

- 1: Rotating machine
- 2: Stator
- 3: Rotor
- 4: Housing
- 21: Core
- 21a: Tooth
- 21b: Cylindrical portion
- 22: Coil
- 31: Shaft member
- 32: Magnet portion
- 32a: Magnet
- 32b: Magnet
- 33: Sleeve
- 311: Extending portion
- A: Rotational axis
- B: Magnetic field
- Sd, Sq: Cross-sectional area
- Ld, Lq: Length

## Claims

1. A rotating machine comprising a surface magnet rotor rotatably disposed inside a stator, the rotor including a shaft member disposed along a rotational axis, and a magnet portion provided on an outer circumferential side of the shaft member and forming alternating opposite magnetic poles along a circumferential direction,
wherein the shaft member is formed to have a cross-sectional area in a d-axis direction of the magnet portion different from a cross-sectional area in a q-axis direction of the magnet portion in a cross-section perpendicular to the rotational axis.

2. The rotating machine according to claim 1, wherein the shaft member is formed such that the cross-sectional area in the d-axis direction is greater than the cross-sectional area in the q-axis direction in the cross-section perpendicular to the rotational axis.

3. The rotating machine according to claim 1, wherein the shaft member is formed such that the cross-sectional area in the q-axis direction is greater than the cross-sectional area in the d-axis direction in the cross-section perpendicular to the rotational axis.

4. A rotating machine comprising a surface magnet rotor rotatably disposed inside a stator, the rotor including a shaft member disposed along a rotational axis, and a magnet portion provided on an outer circumferential side of the shaft member and forming alternating opposite magnetic poles along a circumferential direction,
wherein the shaft member is formed to have a cross-sectional length in a d-axis direction of the magnet portion different from a cross-sectional length in a q-axis direction of the magnet portion in a cross-section perpendicular to the rotational axis.

5. The rotating machine according to claim 4, wherein the shaft member is formed such that the cross-sectional length in the d-axis direction is greater than the cross-sectional length in the q-axis direction in the cross-section perpendicular to the rotational axis.

6. The rotating machine according to claim 4, wherein the shaft member is formed such that the cross-sectional length in the q-axis direction is greater than the cross-sectional length in the d-axis direction in the cross-section perpendicular to the rotational axis.

7. The rotating machine according to claim 2 or 5, wherein the stator forms a magnetic field preceding the d-axis direction in a direction of rotation of the rotor, and rotates the magnetic field in the direction of rotation to rotate the rotor.

8. The rotating machine according to claim 3 or 6, wherein the stator forms a magnetic field preceding the q-axis direction in a direction of rotation of the rotor, and rotates the magnetic field in the direction of rotation to rotate the rotor.

9. The rotating machine according to any one of claims 1 to 8, wherein the magnet portion has a bonded magnet provided on the outer circumferential side of the shaft member and forming alternating opposite magnetic poles along the circumferential direction, and a sintered magnet disposed embedded inside the bonded magnet.

10. A rotating machine comprising a surface magnet rotor rotatably disposed inside a stator, the rotor including a shaft member disposed along a rotational axis, and a magnet portion provided on an outer circumferential side of the shaft member and forming alternating opposite magnetic poles along a circumferential direction,
wherein the shaft member is formed such that the ease of passage of magnetic flux is at a maximum in an angular direction between a d-axis direction of the magnet portion and a q-axis direction of the magnet portion in a cross-section perpendicular to the rotational axis.

11. The rotating machine according to claim 10, wherein the shaft member is formed such that the ease of passage of magnetic flux is at a maximum in an intermediate angular direction between the d-axis direction of the magnet portion and the q-axis direction of the magnet portion in the cross-section perpendicular to the rotational axis.

12. The rotating machine according to claim 10 or 11, wherein the stator forms a magnetic field oriented in the q-axis direction, and rotates the magnetic field to rotate the rotor.
